(19) Europäisches Patentamt
European Patent Office
Office européen des brevets

(11) **EP 4 317 607 A1**

(12) **EUROPEAN PATENT APPLICATION**
published in accordance with Art. 153(4) EPC

(43) Date of publication:
**07.02.2024 Bulletin 2024/06**

(21) Application number: **22804546.4**

(22) Date of filing: **09.05.2022**

(51) International Patent Classification (IPC):
*E02F 9/20* (2006.01)    *E02F 9/26* (2006.01)
*G09B 9/042* (2006.01)    *G09B 9/052* (2006.01)
*G09B 19/16* (2006.01)

(52) Cooperative Patent Classification (CPC):
**E02F 9/20; E02F 9/26; G09B 9/042; G09B 9/052; G09B 19/16**

(86) International application number:
**PCT/JP2022/019627**

(87) International publication number:
**WO 2022/244632 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.05.2021 JP 2021085484**

(71) Applicant: **Komatsu Ltd.**
**Minato-ku**
**Tokyo 107-8414 (JP)**

(72) Inventors:
• **ASAI, Kosuke**
**Tokyo 107-8414 (JP)**
• **MITSUMOTO, Takayuki**
**Tokyo 107-8414 (JP)**
• **IMAIZUMI, Masaaki**
**Tokyo 107-8414 (JP)**
• **HIRABAYASHI, Ken**
**Tokyo 107-8414 (JP)**

(74) Representative: **Flügel Preissner Schober Seidel**
**Patentanwälte PartG mbB**
**Nymphenburger Straße 20**
**80335 München (DE)**

(54) **DISPLAY SYSTEM, WORK MACHINE, AND DISPLAY METHOD**

(57)     A display system includes a state value acquisition unit that acquires a state value of a work machine at the time when the work machine is driven by an operator to implement cycle work for repeating a series of work modes, an actual value calculation unit that calculates, based on the state value, an actual value relating to driving evaluation of the work machine for each of work modes, a target value setting unit that sets a target value relating to driving evaluation for each of work modes, and a display control unit that displays the actual value and the target value on a display device.

FIG.12

EP 4 317 607 A1

**Description**

Field

The present disclosure relates to a display system, a work machine, and a display method.

Background

In order to make an operator master driving skills of a work machine, it is effective to objectively evaluate the driving skills of the operator and present an evaluation result to the operator. Patent Literature 1 discloses a skill evaluation system for an operator.

Citation List

Patent Literature

Patent Literature 1: JP 2019-207570 A

Summary

Technical Problem

Cycle work for repeating a series of work modes is sometimes implemented by a work machine. Therefore, it is necessary to make an operator master driving skills of the cycle work.
An object of the present disclosure is to make an operator master driving skills of cycle work.

Solution to Problem

According to an aspect of the present invention, a display system comprises: a state value acquisition unit that acquires a state value of a work machine at a time when the work machine is driven by an operator to implement cycle work for repeating a series of work modes; an actual value calculation unit that calculates, based on the state value, an actual value relating to driving evaluation for the work machine for each of the work modes; a target value value setting unit that sets a target value relating to the driving evaluation for each of the work modes; and a display control unit that displays the actual value and the target value on a display device.

Advantageous Effects of Invention

According to the present disclosure, it is possible to make an operator master driving skills of cycle work.

Brief Description of Drawings

FIG. 1 is a side view illustrating a work machine according to an embodiment.
FIG. 2 is a configuration diagram illustrating the work machine according to the embodiment.
FIG. 3 is a diagram for explaining cycle work of the work machine according to the embodiment.
FIG. 4 is a diagram for explaining work modes of the work machine according to the embodiment.
FIG. 5 is a diagram for explaining work modes of the work machine according to the embodiment.
FIG. 6 is a functional block diagram illustrating a display system according to the embodiment.
FIG. 7 is a diagram illustrating a setting screen for a target value by a condition setting mode according to the embodiment.
FIG. 8 is a flowchart illustrating a method of setting a target value by the condition setting mode according to the embodiment.
FIG. 9 is a view illustrating a setting screen for a target value by a master operator mode according to the embodiment.
FIG. 10 is a flowchart illustrating a setting method for a target value by the master operator mode according to the embodiment.
FIG. 11 is a flowchart illustrating a display method according to the embodiment.
FIG. 12 is a diagram illustrating a display screen for an evaluation result of driving skills of an operator according to the embodiment.

Description of Embodiments

An embodiment according to the present disclosure is explained below with reference to the drawings. However, the present disclosure is not limited to the embodiment. Constituent elements of the embodiment explained below can be combined as appropriate. A part of the constituent elements is sometimes not used.

In the embodiment, a local coordinate system is set in a work machine 1. A positional relation among units are explained with reference to the local coordinate system. In the local coordinate system, a first axis extending in the left-right direction (the vehicle width direction) of the work machine 1 is represented as an X axis, a second axis extending in the front-rear direction of the work machine 1 is represented as a Y axis, and a third axis extending in the up-down direction of the work machine 1 is represented as a Z axis. The X axis and the Y axis are orthogonal to each other. The Y axis and the Z axis are orthogonal to each other. The Z axis and the X axis are orthogonal to each other. A + X direction is the right direction and a -X direction is the left direction. A + Y direction is the forward direction and a -Y direction is the backward direction. A + Z direction is the upward direction and a -Z direction is the downward direction.

[Overview of the work machine]

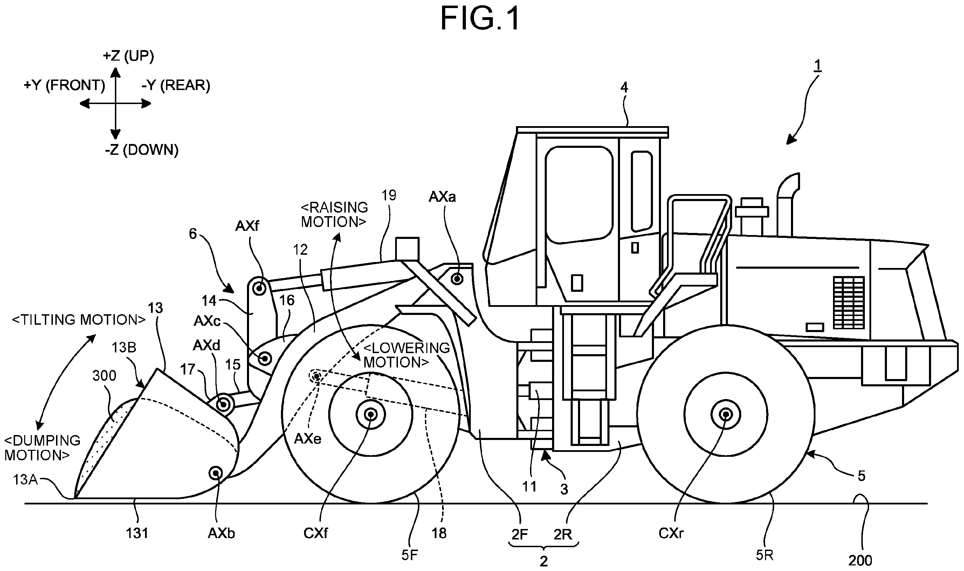

FIG. 1 is a side view illustrating the work machine 1 according to the embodiment. The work machine 1 according to the embodiment is a wheel loader. In the following explanation, the work machine 1 is referred to as wheel loader 1 as appropriate.

As illustrated in FIG. 1, the wheel loader 1 includes a vehicle body 2, an articulate mechanism 3, a cab 4, a wheels 5, and working equipment 6. The wheel loader 1 travels in a work site with wheels 5. The wheel loader 1 implements work using the working equipment 6 in the work site. Examples of work that can be implemented by the wheel loader 1 include excavation work, loading work, transportation work, and snow removal work.

The vehicle body 2 supports the working equipment 6. The vehicle body 2 includes a vehicle body front part 2F and a vehicle body rear part 2R. The vehicle body front part 2F is disposed in front of the vehicle body rear part 2R. The vehicle body front part 2F and the vehicle body rear part 2R are coupled by the articulate mechanism 3. The articulate mechanism 3 includes an articulate cylinder 11. The articulate cylinder 11 is a hydraulic cylinder. The articulate cylinder 11 couples the vehicle body front part 2F and the vehicle body rear part 2R. The articulate cylinder 11 expands and contracts, whereby the vehicle body front part 2F bends in the left-right direction with respect to the vehicle body rear part 2R. The vehicle body front part 2F bends with respect to the vehicle body rear part 2R, whereby the traveling direction of the wheel loader 1 is adjusted.

The cab 4 is supported by the vehicle body 2. In the embodiment, the cab 4 is disposed above the vehicle body rear part 2R. A seat on which an operator is seated is disposed on the inside of the cab 4.

The wheels 5 support the vehicle body 2. The wheels 5 include a front wheel 5F and a rear wheel 5R. The front wheel 5F is disposed in front of the rear wheel 5R. The front wheel 5F is attached to the vehicle body front part 2F. The rear wheel 5R is attached to the vehicle body rear part 2R.

In the embodiment, the X axis is parallel to a rotation axis CXf of the front wheel 5F. The Z axis is orthogonal to a ground contact surface of the front wheel 5F that is in contact with a ground 200. When the wheel loader 1 travels a straight advancing state, the rotation axis CXf of the front wheel 5F and a rotation axis CXr of the rear wheel 5R are parallel to each other.

The working equipment 6 is supported by the vehicle body 2. The working equipment 6 is coupled to the vehicle body front part 2F. The working equipment 6 includes a boom 12, a bucket 13, a bell crank 14, and a bucket link 15.

The proximal end portion of the boom 12 is rotatably coupled to the vehicle body front part 2F. The boom 12 turns centering on a turning axis AXa with respect to the vehicle body front part 2F. A bracket 16 is fixed to an intermediate portion of the boom 12.

The bucket 13 is a work member that excavates an excavation target. The bucket 13 holds an excavated object 300. The bucket 13 includes a blade tip portion 13A and an opening 13B.

The proximal end portion of the bucket 13 is turnably coupled to the distal end portion of the boom 12. The bucket 13 turns centering on a turning axis AXb with respect to the boom 12. The bucket 13 is disposed in front of the front wheel 5F. A bracket 17 is fixed to a part of the bucket 13.

An intermediate portion of the bell crank 14 is turnably coupled to the bracket 16 of the boom 12. The bell crank 14 turns centering on a turning axis AXc with respect to the bracket 16 of the boom 12. The lower end portion of the bell crank 14 is turnably coupled to the proximal end portion of the bucket link 15.

The distal end portion of the bucket link 15 is turnably coupled to the bracket 17 of the bucket 13. The bucket link 15 turns centering on a turning axis AXd with respect to the bracket 17 of the bucket 13. The bell crank 14 is coupled to the bucket 13 via the bucket link 15.

The boom 12 is operated by a lift cylinder 18. The lift cylinder 18 is a hydraulic cylinder. The proximal end portion of the lift cylinder 18 is coupled to the vehicle body front part 2F. The distal end portion of the lift cylinder 18 is coupled to the boom 12. The boom 12 turns centering on a turning axis AXe with respect to the lift cylinder 18.

The bucket 13 is operated by a bucket cylinder 19. The bucket cylinder 19 is a hydraulic cylinder. The proximal end portion of the bucket cylinder 19 is coupled to the vehicle body front part 2F. The distal end portion of the bucket cylinder 19 is coupled to the upper end portion of the bell crank 14. The bell crank 14 turns centering on a turning axis AXf with respect to the bucket cylinder 19.

[Operation of the working equipment]

In the embodiment, the working equipment 6 is front-loading type working equipment in which an opening 13B of the bucket 13 faces forward in excavation work. The lift cylinder 18 expands and contracts, whereby the boom 12 performs a raising motion or a lowering motion. The bucket cylinder 19 expands and contracts, whereby the bucket 13 performs a tilting motion or a dumping motion.

The raising motion of the boom 12 means a motion in which the boom 12 turns centering on the turning axis AXa such that the distal end portion of the boom 12 separates from the ground 200. The lowering motion of the boom 12 means a motion in which the boom 12 turns centering on the turning axis AXa such that the distal end portion of the boom 12 approaches the ground 200.

When the lift cylinder 18 extends, the boom 12 performs the raising motion. When the lift cylinder 18 contracts, the boom 12 performs the lowering motion.

The tilting motion of the bucket 13 means a motion in which the bucket 13 turns centering on the turning axis AXb such that the opening 13B of the bucket 13 faces upward and the blade tip portion 13A separates from the ground 200. The dumping motion of the bucket 13 means a motion in which the bucket 13 turns centering on the turning axis AXb such that the opening 13B of the bucket 13 faces downward and the blade tip portion 13A approaches the ground 200.

When the bucket cylinder 19 extends, the bell crank 14 turns such that the upper end portion of the bell crank 14 moves forward and the lower end portion of the bell crank 14 moves backward. When the lower end portion of the bell crank 14 moves backward, the bucket 13 is pulled backward by the bucket link 15 and performs the tilting motion. When the bucket cylinder 19 contracts, the bell crank 14 turns such that the upper end portion of the bell crank 14 moves backward and the lower end portion of the bell crank 14 moves forward. When the lower end portion of the bell crank 14 moves forward, the bucket 13 is pushed forward by the bucket link 15 and performs the dumping motion.

When the bucket 13 performs the tilting motion, the excavated object 300 is scooped by the bucket 13 and held by the bucket 13. The bucket 13 performs the dumping motion, whereby the excavated object 300 held by the bucket 13 is discharged from the bucket 13.

[Configuration of the work machine]

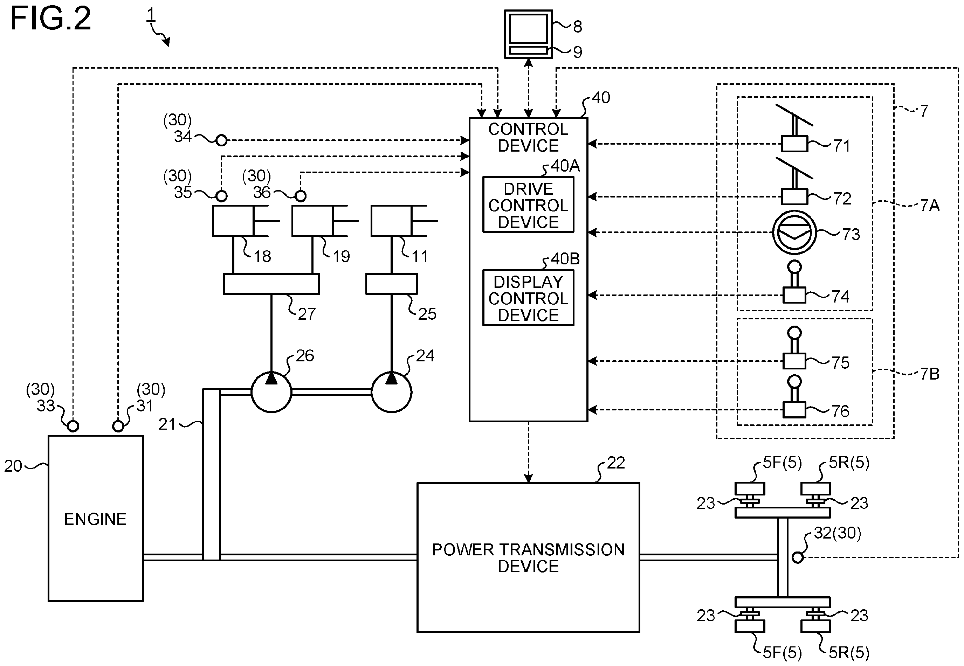

FIG. 2 is a configuration diagram illustrating the work machine 1 according to the embodiment. As illustrated in FIG. 2, the wheel loader 1 includes an engine 20, a power take off (PTO) 21, a power transmission device 22, a brake device 23, a steering pump 24, a steering control valve 25, an articulate cylinder 11, a working equipment pump 26, a working equipment control valve 27, a lift cylinder 18, a bucket cylinder 19, an operation device 7, a display device 8, an input device 9, a sensor system 30, and a control device 40.

The engine 20 is a drive source of the wheel loader 1. The engine 20 is supported by the vehicle body 2. Examples of the engine 20 include a diesel engine.

The power take off 21 distributes a driving force of the engine 20 to the power transmission device 22, the steering pump 24, and the working equipment pump 26.

The power transmission device 22 transmits the driving force of the engine 20 to the wheels 5. The power transmission device 22 controls a speed range and a traveling direction of the wheel loader 1. The power transmission device 22 may be a transmission including a torque converter or a transmission including a plurality of transmission gears.

The brake device 23 decelerates or stops the traveling wheel loader 1.

The steering pump 24 is a hydraulic pump that operates with a driving force generated by the engine 20. Hydraulic oil ejected from the steering pump 24 is supplied to the articulate cylinder 11 via the steering control valve 25. The steering control valve 25 controls a flow rate and a direction of hydraulic oil supplied from the steering pump 24 to the articulate cylinder 11. The articulate mechanism 3 is operated by hydraulic oil supplied from the steering pump 24.

The working equipment pump 26 is a hydraulic pump that operates with the driving force generated by the engine 20. The hydraulic oil ejected from the working equipment pump 26 is supplied to each of the lift cylinder 18 and the bucket cylinder 19 via the working equipment control valve 27. The working equipment control valve 27 controls a flow rate and a direction of the hydraulic oil supplied from the working equipment pump 26 to each of the lift cylinder 18 and the bucket cylinder 19. The working equipment 6 operates with the hydraulic oil supplied from the working equipment pump 26. The working equipment 6 operates with the hydraulic oil supplied from the working equipment pump 26.

The operation device 7 is disposed on the inside of the cab 4. The operation device 7 is operated by the operator. The operation device 7 includes a drive system operation device 7A and a working equipment operation device 7B.

The drive system operation device 7A generates an operation signal for causing at least one of the engine 20, the power transmission device 22, and the brake device 23 to operate. The drive system operation device 7A includes an accelerator operation unit 71, a brake operation unit 72, a steering operation unit 73, and a forward/backward movement operation unit 74.

The accelerator operation unit 71 is operated to adjust traveling speed of the wheel loader 1.

The brake operation unit 72 is operated to adjust the traveling speed of the wheel loader 1.

The steering operation unit 73 is operated to adjust a traveling direction of wheel loader 1.

The forward/backward movement operation unit 74 is operated to switch between forward movement and backward movement of the wheel loader 1.

The working equipment operation device 7B generates an operation signal for causing the working equipment 6 to operate. The working equipment operation device 7B includes a boom operation unit 75 and a bucket operation unit 76.

The boom operation unit 75 is operated to cause the boom 12 to operate.

The bucket operation unit 76 is operated to cause the bucket 13 to operate.

The display device 8 is disposed on the inside of the cab 4. The display device 8 displays display data. The operator of the cab 4 can visually recognize the display data displayed on the display device 8. Examples of the display device 8 include a flat panel display such as a liquid crystal display (LCD) or an organic electroluminescence display (OELD).

The input device 9 is disposed on the inside of the cab 4. The input device 9 is operated by the operator of the cab 4. The input device 9 generates input data based on operation of the operator. Examples of the input device 9 include a touch panel, an operation button, and a computer keyboard. Note that the input device 9 may be a non-contact type input device including an optical sensor or may be a voice input device. The display device 8 and the input device 9 may be integrated or may be separately provided on the inside of the cab 4.

The sensor system 30 detects a state of the wheel loader 1. The sensor system 30 includes an engine speed sensor 31, a vehicle speed sensor 32, a fuel consumption sensor 33, a weight sensor 34, a boom angle sensor 35, and a bucket angle sensor 36.

The engine speed sensor 31 detects engine speed indicating the speed of the engine 20 per unit time. Examples of the engine speed sensor 31 include a magnetic sensor that detects the position of a crank of the engine 20.

The vehicle speed sensor 32 detects traveling speed of the wheel loader 1. Examples of the vehicle speed sensor 32 include a magnetic sensor that detects rotation speed of a drive shaft coupled to the wheel 5.

The fuel consumption sensor 33 detects fuel consumption of the wheel loader 1. Examples of the fuel consumption sensor 33 include a float sensor disposed in a fuel tank.

The weight sensor 34 detects the weight of the excavated object 300 held by the bucket 13. Examples of the weight sensor 34 include a pressure sensor that detects the pressure of the hydraulic oil in the lift cylinder 18, a pressure sensor that detects the pressure of the hydraulic oil in the bucket cylinder 19, and a load meter sensor disposed in at least a part of the working equipment 6.

The boom angle sensor 35 detects a boom angle indicating an angle of the boom 12. The boom angle means an angle of the boom 12 with respect to the vehicle body 2 in the local coordinate system. In the embodiment, the boom angle is an angle formed by a line connecting the turning axis AXa and the turning axis AXb and a line connecting the rotation axis CXf and the rotation axis CXr. Examples of the boom angle sensor 35 include an angle sensor disposed in a coupling portion of the vehicle body front part 2F and the boom 12.

The bucket angle sensor 36 detects a bucket angle indicating an angle of the bucket 13. The bucket angle means an angle of the bucket 13 with respect to the boom 12 in the local coordinate system. In the embodiment, the bucket angle sensor 36 detects a bell crank angle indicating an angle of the bell crank 14 with respect to the boom 12 in the local coordinate system. In the embodiment, the bell crank angle is an angle formed by a line connecting the turning axis AXc and the turning axis AXf and a line connecting the turning axis AXa and the turning axis AXb. The bucket angle and the bell crank angle correspond to each other on a one-to-one basis. The bucket angle sensor 36 detects the bucket angle by detecting the bell crank angle. Examples of the bucket angle sensor 36 include an angle sensor disposed in a coupling portion of the boom 12 and the bell crank 14.

The control device 40 includes a computer system. In the embodiment, the control device 40 includes a drive control device 40A and a display control device 40B.

The drive control device 40A controls an output of the engine 20 based on an operation signal generated by the accelerator operation unit 71. The output of the engine 20 is controlled to adjust the traveling speed of the wheel loader 1.

The drive control device 40A controls the brake device 23 based on an operation signal generated by the brake operation unit 72. The brake device 23 is controlled, whereby the traveling speed of the wheel loader 1 is adjusted.

The drive control device 40A controls the steering control valve 25 based on an operation signal generated by the steering operation unit 73. The steering control valve 25 is controlled, whereby the traveling direction of the wheel loader 1 is adjusted.

The drive control device 40A controls the power transmission device 22 based on an operation signal generated by the forward/backward movement operation unit 74. The power transmission device 22 is controlled, whereby the forward movement and the backward movement of the wheel loader 1 are switched.

The drive control device 40A controls the working equipment control valve 27 based on an operation signal generated by the boom operation unit 75. The working equipment control valve 27 is controlled, whereby the lift cylinder 18 is driven and the boom 12 operates.

The drive control device 40A controls the working equipment control valve 27 based on an operation signal generated by the bucket operation unit 76. The working equipment control valve 27 is controlled, whereby the bucket cylinder 19 is driven and the bucket 13 operates.

[Cycle Work of the work machine]

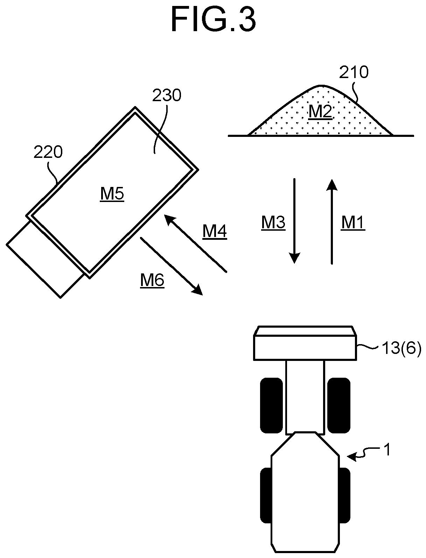

FIG. 3 is a diagram for explaining cycle work of the work machine 1 according to the embodiment. The wheel loader 1 is driven by an operator to implement cycle work of repeating a series of work modes. The cycle work is configured by a plurality of work modes relating one another. The cycle work includes traveling of the wheel loader 1 and an operation of the working equipment 6.

In the embodiment, the cycle work is configured by six work modes. In the embodiment, a series of work modes of the wheel loader 1 includes an unloaded forward mode M1, an excavation mode M2, a loaded backward mode M3, a loaded forward mode M4, a loading mode M5, and an unloaded backward mode M6.

The order of the series of work modes is determined. After the unloaded forward mode M1 is implemented, the excavation mode M2 is implemented. After the excavation mode M2 is implemented, the loaded backward mode M3 is implemented. After the loaded backward mode M3 is implemented, the loaded forward mode M4 is implemented. After the loaded forward mode M4 is implemented, the loading mode M5 is implemented. After the loading mode M5 is implemented, an unloaded backward mode M6 is implemented

The wheel loader 1 implement the cycle work for repeating the series of work modes a plurality of times. After the first unloaded backward mode M6 is implemented, the second unloaded forward mode M1 is implemented.

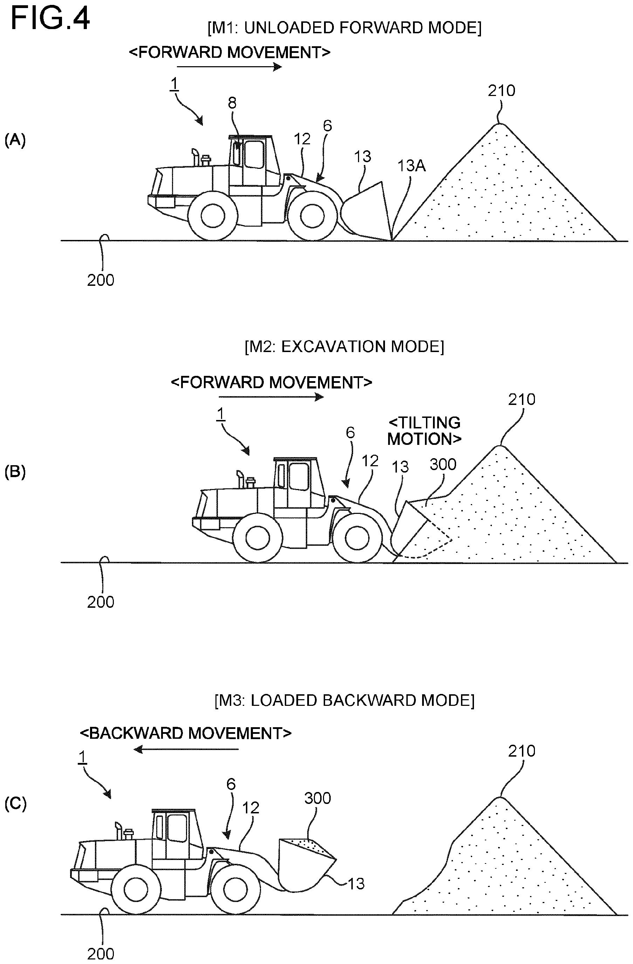

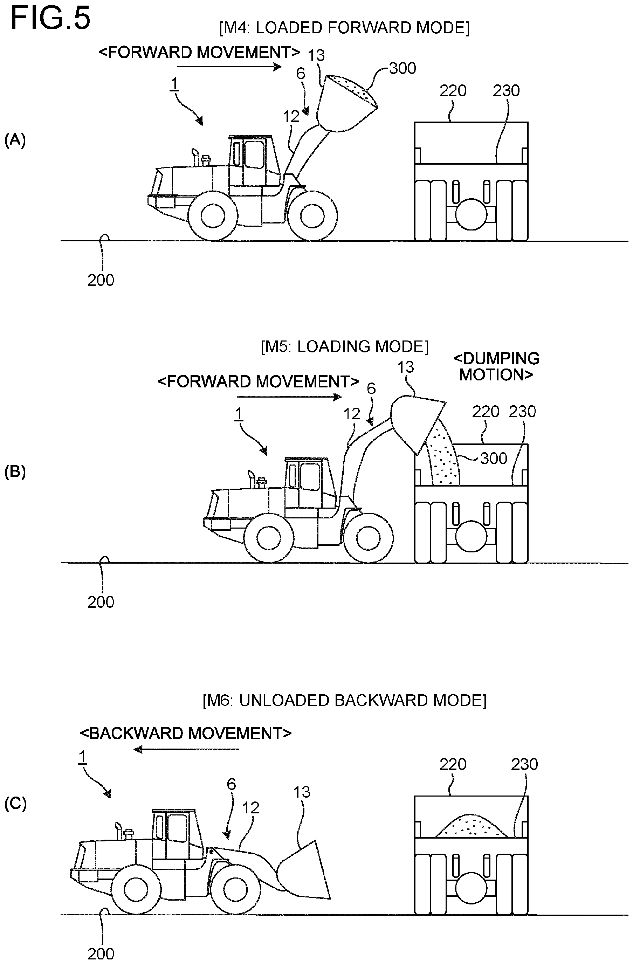

Each of FIG. 4 and FIG. 5 is a diagram for explaining work modes of the work machine 1 according to the embodiment.

As illustrated in FIG. 3 and FIG. 4(A), the unloaded forward mode M1 is a work mode in which the wheel loader 1 moves forward to approach an excavation target. In the embodiment, the excavation target is a natural ground 210 placed on the ground 200. The natural ground 210 means a mountain formed of earth and sand. In the unloaded forward mode M1, the wheel loader 1 moves forward to approach the natural ground 210.

In the unloaded forward mode M1, the operator operates the drive system operation device 7A to advance the wheel loader 1 such that the wheel loader 1 approaches the natural ground 210. When the wheel loader 1 is moved forward, the operator operates the working equipment operation device 7B to control the posture of the working equipment 6 such that the natural ground 210 is excavated by the bucket 13. The operator operates the working equipment operation device 7B to control the posture of the working equipment 6 such that the blade tip portion 13A of the bucket 13 approaches the ground 200. When the wheel loader 1 moves forward in a state in which the blade tip portion 13A is approaching the ground 200, the blade tip portion 13A of the bucket 13 is inserted into the lower end portion of the natural ground 210.

As illustrated in FIG. 3 and FIG. 4(B), the excavation mode M2 is a work mode in which the wheel loader 1 excavates an excavation target with the bucket 13 of the working equipment 6. After the blade tip portion 13A of the bucket 13 is inserted into the natural ground 210, the operator operates the working equipment operation device 7B to cause the bucket 13 to perform the tilting motion. Consequently, the natural ground 210 is excavated by the bucket 13. The bucket 13 scoops the excavated object 300. The excavated object 300 is held by the bucket 13.

As illustrated in FIG. 3 and FIG. 4(C), the loaded backward mode M3 is a work mode in which the wheel loader 1 moves backward to separate from the excavation target in a state in which the excavated object 300 is held by the bucket 13 of the working equipment 6.

As illustrated in FIG. 4(C), in the loaded backward mode M3, the operator operates the drive system operation device 7A to move the wheel loader 1 backward such that the wheel loader 1 separates from the natural ground 210. The operator operates the working equipment operation device 7B to control the posture of the working equipment 6 such that the excavated object 300 does not spill from the bucket 13.

As illustrated in FIG. 3 and FIG. 5(A), the loaded forward mode M4 is a work mode in which the wheel loader 1 advances to approach a loading target. In the embodiment, the loading target is a dump body 230 of a haul vehicle 220 capable of traveling on the ground 200. Examples of the haul vehicle 220 include a dump truck. After the loaded backward mode M3 ends, the wheel loader 1 moves forward while swinging to approach the haul vehicle 220.

In the loaded forward mode M4, the operator operates the drive system operation device 7A to advance the wheel loader 1 such that the wheel loader 1 approaches the haul vehicle 220.

As illustrated in FIG. 3 and FIG. 5(B), the loading mode M5 is a work mode in which the wheel loader 1 loads the excavated object 300 held by the bucket 13 of the working equipment 6 onto the loading target. The operator operates the working equipment operation device 7B to control the posture of the working equipment 6 such that the excavated object 300 held by the bucket 13 is loaded onto the dump body 230 of the haul vehicle 220. The operator controls the posture of the working equipment 6 such that the excavated object 300 does not spill from the bucket 13 and the bucket 13 is disposed above the upper end portion of the dump body 230.

As illustrated in FIG. 3 and FIG. 5(C), the unloaded backward mode M6 is a work mode in which the wheel loader 1 moves backward to separate from the loading target. After the loading mode M5 ends, the wheel loader 1 moves backward to separate from the haul vehicle 220.

Until the excavated object 300 is loaded onto the haul vehicle 220 with a target loading amount, the wheel loader 1 repeats the cycle work including the unloaded forward mode M1, the excavation mode M2, the loaded backward mode M3, the loaded forward mode M4, the loading mode M5, and the unloaded backward mode M6.

[Display system]

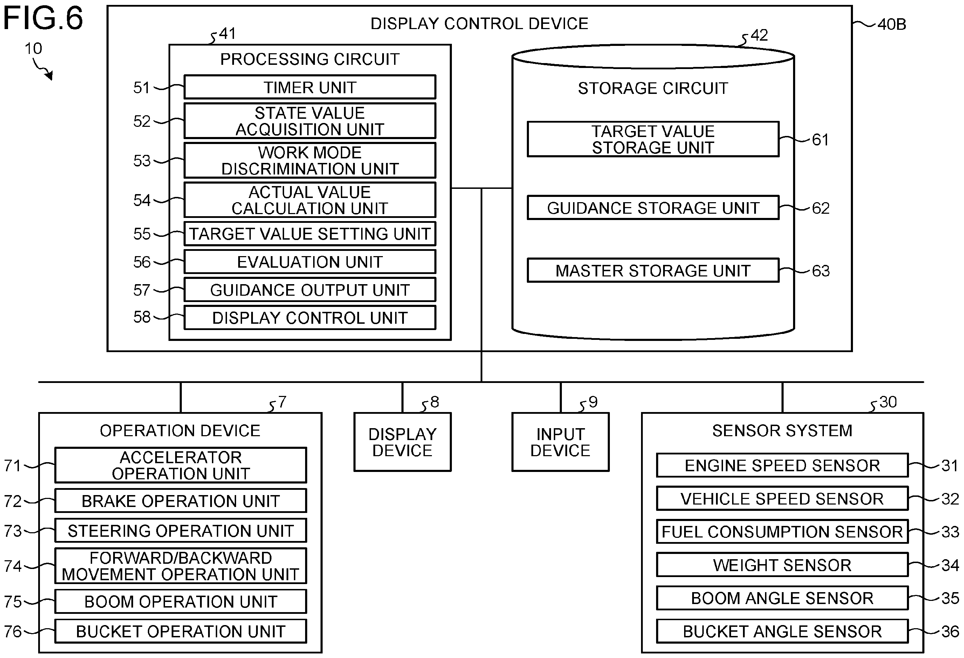

FIG. 6 is a functional block diagram illustrating a display system 10 according to the embodiment. The display system 10 includes a display control device 40B, an operation device 7, a display device 8, an input device 9, and a sensor system 30.

The display control device 40B includes a computer system. The display control device 40B is connected to each of the operation device 7, the display device 8, the input device 9, and the sensor system 30. The display control device 40B includes a processing circuit 41 and a storage circuit 42.

The processing circuit 41 implements arithmetic processing and control command output processing. Examples of the processing circuit 41 include a processor. Examples of the processor include a CPU (Central Processing Unit) or an MPU (Micro Processing Unit).

The storage circuit 42 is connected to the processing circuit 41. The storage circuit 42 stores data. Examples of the storage circuit 42 include a nonvolatile memory or a volatile memory. Examples of the nonvolatile memory include a ROM (Read Only Memory) or a storage. Examples of the storage include a hard disk drive (HDD) or a solid state drive (SSD). Examples of the volatile memory include a RAM (Random Access Memory).

A computer program is stored in the storage circuit 42. The processing circuit 41 exerts a predetermined function by acquiring and executing a computer program from the storage circuit 42.

The processing circuit 41 includes a timer unit 51, a state value acquisition unit 52, a work mode discrimination unit 53, an actual value calculation unit 54, a target value setting unit 55, an evaluation unit 56, a guidance output unit 57, and a display control unit 58.

The storage circuit 42 includes a target value storage unit 61, a guidance storage unit 62, and a master storage unit 63.

The timer unit 51 measures time. The timer unit 51 measures an elapsed time from a specified time point.

The state value acquisition unit 52 acquires a state value of the wheel loader 1 at the time when the wheel loader 1 is operated by the operator to implement the cycle work for repeating the series of work modes. The state value of the wheel loader 1 means a numerical value indicating a state of the wheel loader 1.

Examples of the state value of the wheel loader 1 include an engine speed, traveling speed of the wheel loader 1, fuel consumption of the wheel loader 1, the weight of the excavated object 300 held by the bucket 13, an angle of the boom 12, an angle of the bucket 13, an accelerator operation amount, a brake operation amount, a steering operation amount, and a traveling direction (forward or backward) of the wheel loader 1. The state value of the wheel loader 1 is not limited to the above examples.

The engine speed is detected by the engine speed sensor 31. The state value acquisition unit 52 can acquire the engine speed from the engine speed sensor 31.

The traveling speed of the wheel loader 1 is detected by the vehicle speed sensor 32. The state value acquisition unit 52 can acquire the traveling speed of the wheel loader 1 from the vehicle speed sensor 32.

The fuel consumption of the wheel loader 1 is detected by the fuel consumption sensor 33. The state value acquisition unit 52 can acquire the fuel consumption of the wheel loader 1 from the fuel consumption sensor 33.

The weight of the excavated object 300 held by the bucket 13 is detected by the weight sensor 34. The state value acquisition unit 52 can acquire the weight of the excavated object 300 held by the bucket 13 from the weight sensor 34.

The angle of the boom 12 is detected by the boom angle sensor 35. The state value acquisition unit 52 can acquire the angle of the boom 12 from the boom angle sensor 35.

The angle of the bucket 13 is detected by the bucket angle sensor 36. The state value acquisition unit 52 can acquire the angle of the bucket 13 from the bucket angle sensor 36.

The accelerator operation amount is derived based on an operation signal output from the accelerator operation unit 71. The state value acquisition unit 52 can acquire the accelerator operation amount from the accelerator operation unit 71.

The brake operation amount is derived based on an operation signal output from the brake operation unit 72. The state value acquisition unit 52 can acquire the brake operation amount from the brake operation unit 72.

The steering operation amount is derived based on an operation signal output from the steering operation unit 73. The state value acquisition unit 52 can acquire the steering operation amount from the steering operation unit 73.

The traveling direction of the wheel loader 1 is derived based on an operation signal output from the forward/backward movement operation unit 74. The state value acquisition unit 52 can acquire the traveling direction of the wheel loader 1 from the forward/backward movement operation unit 74. The traveling direction of the wheel loader 1 indicates forward movement or backward movement of the wheel loader 1.

The work mode discrimination unit 53 discriminates, based on the state value acquired by the state value acquisition unit 52, a work mode implemented by the wheel loader 1. The work mode discrimination unit 53 can discriminate the work mode based on, for example, the traveling direction of the wheel loader 1, the weight of the excavated object 300 held by the bucket 13, the angle of the boom 12, and the angle of the bucket 13. The work mode discrimination unit 53 can discriminate, based on an operation signal of the forward/backward movement operation unit 74, whether the wheel loader 1 is moving forward. Note that, when a rotation sensor that detects a rotating direction of the wheels 5 is provided, the work mode discrimination unit 53 may discriminate, based on detection data of the rotating direction of the wheels 5 detected by the rotation sensor, whether the wheel loader 1 is moving forward. The work mode discrimination unit 53 can acquire detection data of the weight of the excavated object 300 held by the bucket 13 from the weight sensor 34. The work mode discrimination unit 53 can acquire detection data of the angle of the boom 12 from the boom angle sensor 35 and acquire detection data of the angle of the bucket 13 from the bucket angle sensor 36.

For example, when the wheel loader 1 is implementing the excavation mode M2, the wheel loader 1 moves forward, the weight of the excavated object 300 held by the bucket 13 increases, the angle of the boom 12 is adjusted to a predetermined angle, and the bucket 13 performs the tilting motion from a state in which the blade tip portion 13A is approaching the ground 200. Therefore, the work mode discrimination unit 53 can discriminate that the work mode implemented by the wheel loader 1 is the excavation mode M2 based on the traveling direction of the wheel loader 1, the weight of the excavated object 300 held by the bucket 13, the angle of the boom 12, and the angle of the bucket 13.

For example, when the wheel loader 1 is implementing the loaded backward mode M3, the wheel loader 1 moves backward, the weight of the excavated object 300 held by the bucket 13 is constant, and the angle of the boom 12 and the angle of the bucket 13 are maintained at constant values such that the excavated object 300 does not spill from the bucket 13. Therefore, the work mode discrimination unit 53 can discriminate that the work mode implemented by the wheel loader 1 is the loaded backward mode M3 based on the traveling direction of the wheel loader 1, the weight of the excavated object 300 held by the bucket 13, the angle of the boom 12, and the angle of the bucket 13.

Similarly, the work mode discrimination unit 53 can discriminate, based on, for example, the traveling direction of the wheel loader 1, the weight of the excavated object 300 held by the bucket 13, the angle of the boom 12, and the angle of the bucket 13, which of the unloaded forward mode M1, the loaded forward mode M4, the loading mode M5, and the unloaded backward mode M6 the work mode implemented by the wheel loader 1 is.

Note that the work mode discrimination unit 53 may discriminate the work mode implemented by the wheel loader 1 based on, for example, the traveling direction of the wheel loader 1, a traction force, a load applied to the working equipment 6, the angle of the boom 12, and the angle of the bucket 13. The traction force is calculated based on, for example, output torque of the engine 20, a speed ratio of an input and an output of the power transmission device 22, and a load radius of the wheels 5. For example, when the wheel loader 1 is implementing the excavation mode M2, since the traction force increases, the work mode discrimination unit 53 can discriminate, based on the traction force, that the work mode implemented by the wheel loader 1 is the excavation mode M2.

The actual value calculation unit 54 calculates an actual value relating to driving evaluation of the wheel loader 1 for each of the plurality of work modes based on the state value acquired by the state value acquisition unit 52.

The target value setting unit 55 sets a target value relating to the driving evaluation of the wheel loader 1 for each of the plurality of work modes.

The driving evaluation includes fuel efficiency [Liter/hour] and work efficiency [ton/Liter] of the wheel loader 1.

The fuel efficiency of the wheel loader 1 means fuel consumption of the wheel loader 1 per unit time. The work efficiency of the wheel loader 1 means a work amount of the wheel loader 1 with respect to the fuel consumption. In the embodiment, the work amount of the wheel loader 1 means a loading amount of the excavated object 300 onto the loading target. The loading amount in one cycle work is equal to the weight of the excavated object 300 held by the bucket 13.

The actual value calculation unit 54 calculates an actual value of the fuel efficiency and an actual value of the work efficiency based on the state value acquired by the state value acquisition unit 52. The actual value calculation unit 54 can calculate the actual value of the fuel efficiency based on the fuel consumption detected by the fuel consumption sensor 33 and the time measured by the timer unit 51. The actual value calculation unit 54 can calculate the actual value of the work efficiency based on the weight of the excavated object 300 detected by the weight sensor 34 and the fuel consumption detected by the fuel consumption sensor 33.

The target value relating to the driving evaluation is a predetermined value and is stored in the target value storage unit 61. The target value setting unit 55 sets the target value relating to the driving evaluation based on data stored in the target value storage unit 61. The target value setting unit 55 can change (customize) the target value based on data input from the input device 9.

In the embodiment, the target value setting unit 55 can set the target value in one setting mode of the condition setting mode and the master operator mode. The condition setting mode means a setting mode for setting training conditions for the operator and automatically generating an optimal target value. The master operator mode means a setting mode for generating an optimal target value based on an operation pattern of a skilled operator.

Note that the driving evaluation is not limited to the fuel efficiency and the work efficiency. Examples of the driving evaluation include a cycle time indicating a time required for implementing one cycle work, engine speed, a moving distance of the wheel loader 1, and a loading amount of the excavated object 300 loaded on the loading target in one cycle work. As explained above, the loading amount in one cycle work is equal to the weight of the excavated object 300 held by the bucket 13.

The evaluation unit 56 evaluates driving skills of the operator based on the actual value relating to the driving evaluation calculated by the actual value calculation unit 54 and the target value relating to the driving evaluation set by the target value setting unit 55. The evaluation unit 56 outputs evaluation data indicating an evaluation result of the driving skills of the operator. The evaluation unit 56 evaluates the driving skills of the operator for each of the plurality of work modes and outputs evaluation data for each of the plurality of work modes.

The evaluation data output from the evaluation unit 56 includes a difference between the actual value calculated for each of the plurality of work modes and the target value. The evaluation unit 56 calculates, for each of the plurality of work modes, a difference between the actual value calculated by the actual value calculation unit 54 and the target value set by the target value setting unit 55 and outputs evaluation data.

The guidance output unit 57 outputs guidance relating to the driving of the operator based on the actual value relating to the driving evaluation calculated by the actual value calculation unit 54. The guidance output unit 57 outputs guidance relating to the driving of the operator such that the difference between the actual value and the target value decreases. For example, when the operator drives the wheel loader 1 in a recommended driving pattern, the actual value relating to the driving evaluation approaches the target value. That is, when driving skills of the operator are high, the difference between the actual value and the target value decreases. On the other hand, when driving skills of the operator for the wheel loader 1 is low, the difference between the actual value and the target value increases. The guidance output unit 57 outputs guidance such that the operator can drive the wheel loader 1 in the recommended driving pattern. The guidance output unit 57 outputs guidance for each of the plurality of work modes.

A plurality of guidance patterns are stored in advance in the guidance storage unit 62. The guidance output unit 57 outputs the guidance based on the actual value relating to the driving evaluation calculated by the actual value calculation unit 54 and the data stored in the guidance storage unit 62.

The display control unit 58 displays, on the display device 8, the actual value relating to the driving evaluation calculated by the actual value calculation unit 54 and the target value relating to the driving evaluation set by the target value setting unit 55. The display control unit 58 displays the actual value and the target value on the display device 8 for each of the plurality of work modes.

The display control unit 58 displays the evaluation data of the driving function of the operator output from the evaluation unit 56 on the display device 8. The display control unit 58 displays the evaluation data of the driving skills on the display device 8 for each of the plurality of work modes.

The display control unit 58 displays, on the display device 8, the guidance relating to the driving of the operator output from the guidance output unit 57. The display control unit 58 displays the guidance on the display device 8 for each of the plurality of work modes.

[Method for setting the target value]

Next, a method of setting the target value relating to the driving evaluation is explained. The target value is a numerical value relating to the driving evaluation acquired when the wheel loader 1 is driven in the recommended driving pattern. As explained above, the target value setting unit 55 sets the target value in at least one setting mode of the condition setting mode and the master operator mode.

< Condition setting mode >

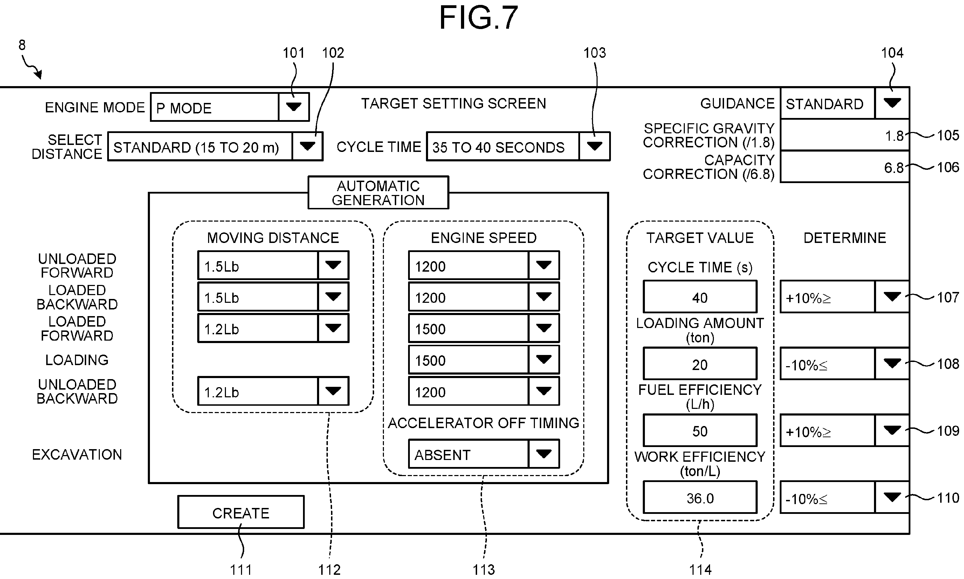

The condition setting mode is explained. FIG. 7 is a diagram illustrating a setting screen for the target value by the condition setting mode according to the embodiment.

The target value in the condition setting mode is, for example, a value acquired by the wheel loader 1 being driven in the recommended driving pattern in a test site. The target value in the condition setting mode is a so-called manufacturer's recommended value. The target value is set for each of the plurality of work modes.

In the embodiment, a plurality of target values are set for one work mode. In the embodiment, the target value is customized according to, for example, a training condition for the operator. A plurality of target values are prepared for one work mode such that the target value can be customized.

The target value acquired by the wheel loader 1 being driven in the recommended operation pattern is stored in the target value storage unit 61. In the target value storage unit 61, the target value relating to the driving evaluation is stored in advance.

For example, the operator can set the training conditions according to a training site. The operator can set the training conditions by operating the input device 9. Note that, for example, a trainer may operate the input device 9 to set the training conditions. In the following explanation, in order to simplify the explanation, it is assumed that the operator operates the input device 9 to set the training conditions.

The target value setting unit 55 customizes the target value based on the data input from the input device 9. In the target value storage unit 61, a plurality of target values are stored for one work mode in advance according to each of an assumed plurality of training conditions. The target value setting unit 55 selects, based on the input data from the input device 9, a specific target value from the plurality of target values prepared for one work mode.

In the embodiment, the operator inputs target values of an engine mode, a moving distance of the wheel loader 1, and a time required for implementing one cycle work to the display control device 40B via the input device 9 as the training conditions.

The operator can set the engine mode based on, for example, a situation of the training site. The operator can select at least one of a "P mode (power mode)" and an "E mode (economy mode)" as the engine mode. The P mode means an engine mode for prioritizing the work efficiency. The E mode means an engine mode for prioritizing fuel efficiency.

The operator can set the moving distance based on, for example, the breadth of the training site or relative positions of the excavation target and the loading target. The operator can select at least one of "short (to 15 m)", "standard (15 to 20 m)", and "long (20 to 25 m)" as the moving distance.

The operator can set the cycle time based on, for example, the situation of the training site. The operator can select at least one of "25 to 30 seconds", "30 to 35 seconds", "35 to 40 seconds", "40 to 45 seconds", "45 to 50 seconds", "50 to 55 seconds", "55 to 60 seconds", and "60 to 65 seconds" as the cycle time.

As explained above, in the embodiment, the operator can set any combination according to the training conditions out of a plurality of combinations of the engine mode, the moving distance, and the cycle time.

In the target value storage unit 61, for each of a plurality of combinations of the engine mode, the moving distance, the cycle time, and the engine speed, target values for the work time indicating the time required for implementing one work mode, the fuel consumption, the moving distance, and the engine speed are stored in advance. As explained above, the target value is acquired by the wheel loader 1 being driven in the recommended driving pattern in the test site. The target value setting unit 55 sets a target value matching the training conditions out of the plurality of target values stored in the target value storage unit 61 based on input data from the input device 9.

As illustrated in FIG. 7, a pull-down button 101 for selecting an engine mode is displayed on the display device 8. The operator can set the engine mode by operating the pull-down button 101 via the input device 9. A pull-down button 102 for selecting the moving distance is displayed on the display device 8. The operator can set the moving distance by operating the pull-down button 102 via the input device 9. A pull-down button 103 for selecting the cycle time is displayed on the display device 8. The operator can set the cycle time by operating the pull-down button 103 via the input device 9.

The operator can set a guidance level. The operator can select standard guidance level or a beginner guidance level as the guidance level. When the standard guidance level is selected, a recommended numerical value is included in the guidance output from the guidance output unit 57. When the beginner guidance level is selected, a recommended numerical value is not included in the guidance output from the guidance output unit 57. As illustrated in FIG. 7, a pull-down button 104 for selecting the guidance level is displayed on the display device 8. The operator can set the guidance level by operating the pull-down button 104 via the input device 9.

The operator can correct the specific gravity of the excavated object 300. The operator can correct the capacity of the bucket 13. The operator can correct the specific gravity of the excavated object 300 by inputting a numerical value to a display area 105 via the input device 9. The operator can correct the capacity of the bucket 13 by inputting a numerical value to a display area 106 via the input device 9. Note that a default value is displayed in each of the display area 105 and the display area 106. When it is unnecessary to correct the numerical value, the default value is set.

The operator can set a tolerance for quality determination of the driving evaluation. The operator can set a tolerance for a target value for which the good determination is allowed. In an example illustrated in FIG. 7, the driving evaluation includes a cycle time, a loading amount, fuel efficiency, and work efficiency. The operator can set an allowable tolerance for the target value of the cycle time by operating a pull-down button 107 via the input device 9. The operator can set a tolerance for the target value of the loading amount by operating a pull-down button 108 via the input device 9. The operator can set a tolerance for the target value of the fuel efficiency by operating a pull-down button 109 via the input device 9. The operator can set a tolerance for the target value of the work efficiency by operating a pull-down button 110 via the input device 9.

When the input by the input device 9 ends and the operator operates a button symbol 111 via the input device 9, the target value setting unit 55 calculates the target value for each of the moving distance and the engine speed in each of the plurality of work modes based on the input data generated by the input device 9 and the data stored in the target value storage unit 61. The target value setting unit 55 calculates the target value for each of the cycle time, the loading amount, the fuel efficiency, and the work efficiency. The display control unit 58 displays the target value of the moving distance in each of the plurality of work modes in a display area 112 of the display device 8. The display control unit 58 displays the target value of the engine speed in each of the plurality of work modes in a display area 113 of the display device 8. The display control unit 58 displays the target value for each of the cycle time, the loading amount, the fuel efficiency, and the work efficiency in a display area 114 of the display device 8.

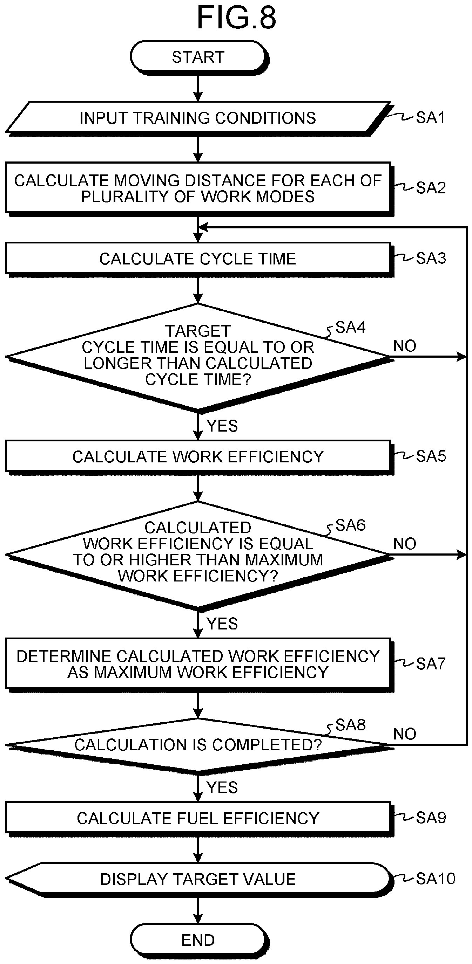

FIG. 8 is a flowchart illustrating a method of setting a target value by the condition setting mode according to the embodiment.

The operator operates the input device 9 and sets training conditions. As explained above, the training conditions include the engine mode, the moving distance, and the cycle time (step SA1).

When the training conditions are input and the button symbol 111 is operated, the target value setting unit 55 calculates a moving distance of the wheel loader 1 for each of the plurality of work modes (step SA2).

In the target value storage unit 61, a target value of each of the working time, the fuel consumption, the moving distance, and the engine speed is stored in advance for each of a plurality of combinations of the engine mode, the moving distance, the cycle time, and the engine speed. The target value setting unit 55 selects, based on the input data from the input device 9 input in step SA1, a target value of the moving distance matching the input data out of a plurality of target values of the moving distance stored in the target value storage unit 61.

When a dimension in the front-rear direction of the vehicle body 2 of the wheel loader 1 is represented as Lb, the moving distances in the unloaded forward mode and the loaded backward mode are selected out of "short (1.0 Lb)", "standard (1.5 Lb)", and "long (2.0 Lb)". The moving distances in the loaded forward mode and the unloaded backward mode are selected out of "short (0.8 Lb)", "standard (1.2 Lb)", and "long (1.6 Lb)".

After selecting the target value of the movement distance, the target value setting unit 55 extracts a work time corresponding to the selected target value of the moving distance. The working time is extracted for each of the six work modes. The target value setting unit 55 calculates the cycle time based on the work time of each of the six work modes (step SA3).

When the work time required for implementing one work mode is represented as Tt(n), the cycle time CT calculated in step SA3 is represented by the following equation (1). However, n = 1 to 6, Tt (1) indicates a work time required for the unloaded forward mode, Tt (2) indicates a work time required for the excavation mode, Tt (3) indicates a work time required for the loaded backward mode, Tt (4) indicates the work time required in the loaded forward mode, Tt (5) indicates a work time required in the loading mode, and Tt (6) indicates a work time required for the unloaded backward mode.

$$CT = \sum Tt(n) \qquad \cdots (1)$$

The target value setting unit 55 compares a calculation cycle time indicating the cycle time calculated in step SA3 and the target cycle time input in step SA1. The target value setting unit 55 determines whether the target cycle time is equal to or longer than the calculated cycle time (step SA4).

When determining in step SA4 that the target cycle time is not equal to or longer than the calculated cycle time (step SA4: No), the target value setting unit 55 returns to the processing in step SA3. That is, when the calculated cycle time calculated by the target value setting unit 55 is longer than the target cycle time set by the operator, the target value setting unit 55 changes the combination explained above, thereafter, extracts a work time corresponding to the combination, and calculates a cycle time based on the working time of each of the six work modes.

When determining in step SA4 that the target cycle time is equal to or longer than the calculated cycle time (step SA4: Yes), the target value setting unit 55 calculates work efficiency TL based on the work time and the fuel consumption corresponding to the moving distance selected in step SA2 and a loading amount estimated from the capacity of the bucket 13 (step SA5).

That is, the target value setting unit 55 calculates fuel consumption [cc] in each of the plurality of work modes based on the engine mode corresponding to the moving distance selected in step SA2. When fuel consumption in one work mode is represented as Ft(n), fuel consumption F[Liter] in one cycle work is represented by the following Expression (2). Here, n = 1 to 6, Ft(1) indicates fuel consumption in the unloaded forward mode, Ft(2) indicates fuel consumption in the excavation mode, Ft(3) indicates fuel consumption in the loaded backward mode, Ft(4) indicates fuel consumption in the loaded forward mode, Ft(5) indicates fuel consumption in the loading mode, and Ft(6) indicates fuel consumption in the unloaded backward mode.

$$F = \frac{\sum Ft(n)}{1000} \qquad \cdots (2)$$

When a loading amount is represented as Wt, the work efficiency TL is represented by the following Expression (3).

$$TL = \frac{Wt}{F} \qquad \cdots (3)$$

The target value setting unit 55 compares calculated work efficiency indicating the work efficiency calculated in step SA5 and maximum work efficiency indicating a maximum value of the already calculated work efficiency. The target value setting unit 55 determines whether the calculated work efficiency is equal to or higher than the maximum work efficiency (step SA6).

When determining in step SA6 that the calculated work efficiency is not equal to or higher than the maximum work efficiency (step SA6: No), the target value setting unit 55 returns to the processing in step SA3. That is, when the calculated work efficiency calculated by the target value setting unit 55 is smaller than the already calculated maximum work efficiency, the target value setting unit 55 changes the combination explained above and implements the processing in step SA3 to step SA6.

When determining in step SA6 that the calculated work efficiency is equal to or higher than the maximum work efficiency (step SA6: Yes), the target value setting unit 55 determines the calculated work efficiency as the maximum work efficiency. That is, the calculated work efficiency calculated in step SA5 is stored as the maximum work efficiency (step SA7).

The target value setting unit 55 repeats the processing in step SA2 to step SA7 for each of the plurality of combinations explained above. The target value setting unit 55 determines whether calculation for all of the combinations has been completed (step SA8).

When determining in step SA8 that the calculation has not been completed (step SA8: No), the target value setting unit 55 returns to the processing of step SA3.

When determining in step SA8 that the calculation has been completed (step SA8: Yes), the target value setting unit 55 calculates fuel efficiency (step SA9).

Fuel efficiency LH is represented by the following Expression (4).

$$LH = \frac{3600 \times F}{CT} \qquad \cdots (4)$$

A target value of the cycle time is calculated in step SA3 and step SA4. A target value of the loading amount is determined based on the capacity of the bucket 13. A target value of the fuel efficiency is calculated in step SA9. A target value of the work efficiency is calculated in step SA6 and step SA7. The display control unit 58 displays the target values of the cycle time, the loading amount, the fuel efficiency, and the work efficiency in the display area 114 of the display device 8 (step SA10).

< Master operator mode >

Next, the master operator mode is explained. In the master operator mode, the target value setting unit 55 sets the target value relating to the driving evaluation based on a state value of the wheel loader 1 at the time when the wheel loader 1 is typically driven by a skilled operator who is another operator different from an operator to be trained.

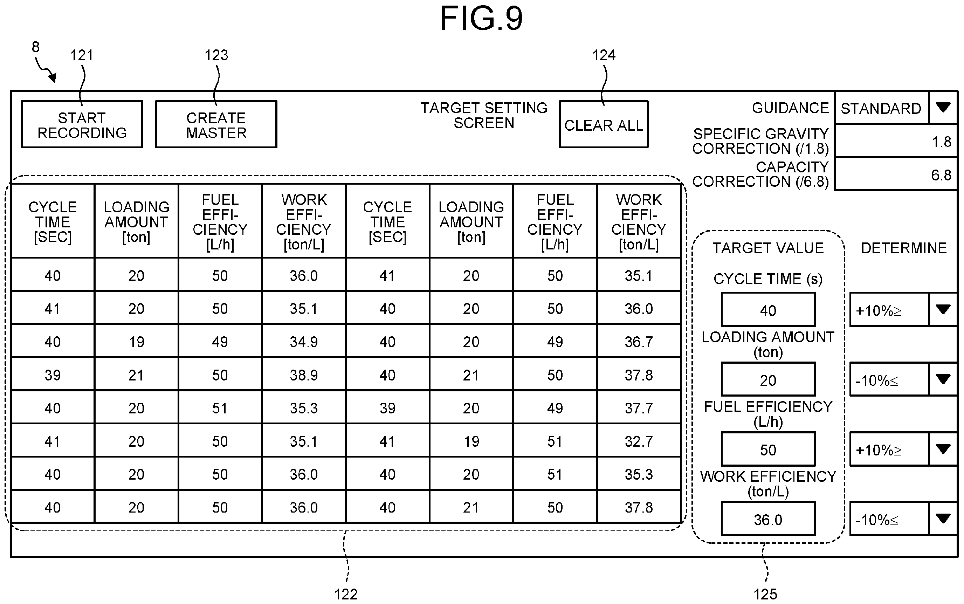

FIG. 9 is a diagram illustrating a setting screen for a target value in the master operator mode according to the embodiment.

The skilled operator operates, via the input device 9, a button symbol 121 displayed on the display device 8. After operating the button symbol 121, the skilled operator starts driving of the wheel loader 1 such that the wheel loader 1 implements cycle work. The button symbol 121 is operated, whereby the state value acquisition unit 52 acquires a state value of the wheel loader 1 at the time when the wheel loader 1 is operated by the skilled operator. The state value is recorded in the master storage unit 63.

The cycle work of the wheel loader 1 driven by the skilled operator is implemented a plurality of times. In the embodiment, the cycle work of the wheel loader 1 driven by the skilled operator is implemented at least 16 times. The number of times of the cycle work only has to be the number of times sufficiently for setting the target value and is not limited sixteen times.

The display control unit 58 displays the state value acquired in each of the plurality of cycle work in a display area 122 of the display device 8.

A button symbol 123 displayed on the display device 8 is operated via the input device 9, whereby the target value setting unit 55 analyzes a state recorded in the master storage unit 63 and generates master data. The generated master data is stored in the master storage unit 63. Note that a button symbol 124 displayed on the display device 8 is operated via the input device 9, whereby the master data is erased from the master storage unit 63.

The target value setting unit 55 calculates a target value for each of the cycle time, the loading amount, the fuel efficiency, and the work efficiency based on the master data. The display control unit 58 displays the target value for each of the cycle time, the loading amount, the fuel efficiency, and the work efficiency in a display area 125 of the display device 8. The target value of the cycle time may be an average value of cycle times of cycle work implemented a plurality of times. The target value of the loading amount may be an average value of loading amounts in the cycle work implemented a plurality of times. The target value of the fuel efficiency may be an average value of the fuel efficiency in the cycle work implemented a plurality of times. The target value of the work efficiency may be an average value of work efficiency in the cycle work implemented a plurality of times.

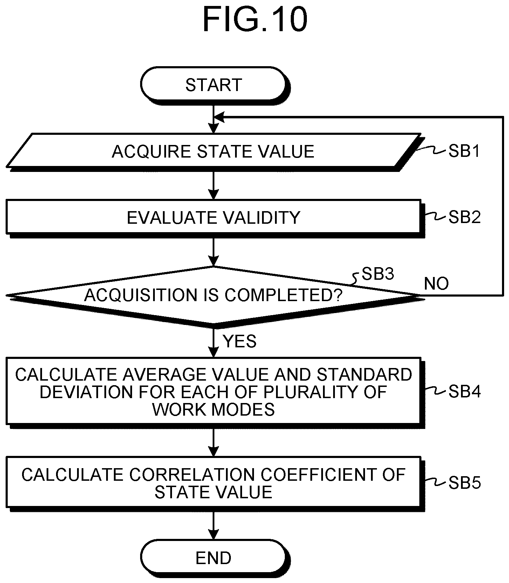

FIG. 10 is a flowchart illustrating a target value setting method by the master operator mode according to the embodiment.

When the button symbol 121 is operated and the driving of the wheel loader 1 by the skilled operator is started, the state value acquisition unit 52 acquires a state value of the wheel loader 1 at the time when the wheel loader 1 is operated by the skilled operator. The state value is acquired for each cycle work implemented a plurality of times. In embodiment, the cycle work is implemented at least 16 times. The state value is acquired for each of the six work modes. The state value is recorded in the master storage unit 63 (step SB1).

In an example illustrated in FIG. 10, it is assumed that state values acquired by the state value acquisition unit 52 are seven items of engine speed, an accelerator operation amount, a brake operation amount, a moving distance, a work time, a loading amount, and fuel consumption.

The target value setting unit 55 evaluates the validity of the state value acquired in step SB1. That is, the target value setting unit 55 determines whether the state value acquired in step SB1 is abnormal (step SB2).

The target value setting unit 55 evaluates the validity of the state value based on the following Expression (5) and Expression (6).

$$|CT(m) - Tav| > 2 \times Tsd \qquad \cdots (5)$$

$$|W(m) - Wav| > 2 \times Wsd \qquad \cdots (6)$$

In Expression (5), m represents the number of times state values are acquired. If there is no abnormal state value, m is equal to the number of times of cycle work to be implemented. That is, in the embodiment, m = 1 to 16. $CT(m)$ represents a cycle time [sec.] in one cycle work, $Tav$ represents an average value of cycle times for the number of times cycle times are acquired, and $Tsd$ represents a standard deviation of the cycle times for the number of times the cycle times are acquired.

In Expression (6), m is the number of times of state values are acquired. In the embodiment, m = 1 to 16. $W(m)$ represents a loading amount [ton] in one cycle work, $Wav$ represents an average value of loading amounts for the number of times the loading amounts are acquired, and $Wsd$ represents a standard deviation of the loading amounts for the number of times the loading amounts are acquired.

A state value satisfying the conditions of Expression (5) and Expression (6) is determined as abnormal and excluded.

The state value acquisition unit 52 determines whether acquisition of a predetermined number of normal state values has been completed. In the embodiment, the predetermined number is sixteen. (step SB3).

When determining in step SB3 that the acquisition of the state value has not been completed (step SB3: No), the state value acquisition unit 52 returns to step SB1. The processing of step SB1 and step SB2 is repeated until the acquisition of the predetermined number of normal state values is completed.

When it is determined in step SB3 that the acquisition of the predetermined number of normal state values has been completed (step SB3: Yes), the target value setting unit 55 calculates an average value and a standard deviation for each of the seven items of state values for each of the plurality of work modes (step SB4).

The target value setting unit 55 calculates a correlation coefficient among the seven items of state values (step SB5).

When the state value acquired by the state value acquisition unit 52 is represented as $P[n][k][m]$, the average value of the state values for each of the plurality of work modes is represented as $Pav[n][k]$, the standard deviation of the state values for each of the plurality of work modes is represented as $Psd[n][k]$, and the correlation coefficient is $D[n][k][s]$, the following Expression (7) and Expression (8) hold. Note that n indicates the number of work modes. In the embodiment, since the number of work modes is six, n = 1 to 6. k and s indicate the number of items of the state values. In the embodiment, since the state value are seven items, k, s = 1 to 7. m indicates the number of times of the cycle work. In the embodiment, since the cycle work is implemented sixteen times, m = 1 to 16.

$$
\begin{cases}
Pst[n][k][m] & = \quad (P[n][k][m] - Pav[n][k])/Psd[n][k] \\
& \quad (Psd[n][k] != 0) \\
Pst[n][k][m] & = \quad P[n][k][m] - Pav[n][k] \\
& \quad (Psd[n][k] = 0)
\end{cases} \quad \cdots (7)
$$

$$
\begin{cases}
D[n][k][s] & = \quad \sum (Pst[n][k][m] \times Pst[n][s][m])/16 \\
& \quad (k < s) \\
D[n][k][s] & = \quad 1 \\
& \quad (k = s) \\
D[n][k][s] & = \quad D[n][s][k] \\
& \quad (k > s)
\end{cases} \quad \cdots (8)
$$

The guidance output unit 57 calculates a deviation degree between work content of the skilled operator and work content of a training target operator. In the embodiment, the guidance output unit 57 calculates, based on an MT method (Maharanobis-Taguchi System), deviation degrees of the state values of the seven items by calculating master data including an average value, a standard deviation, and a correlation coefficient and a state value of the wheel loader 1 at the time when the wheel loader 1 is driven by the operator. The guidance output unit 57 outputs guidance using a state value having a deviation degree equal to or greater than a predetermined value as an item of driving evaluation that should be improved. The method for calculating the deviation degree is not limited to the MT method.

[Display method]

Next, a method of displaying a training result of driving skills of the operator is explained. After the target value is set, training of the operator is started.

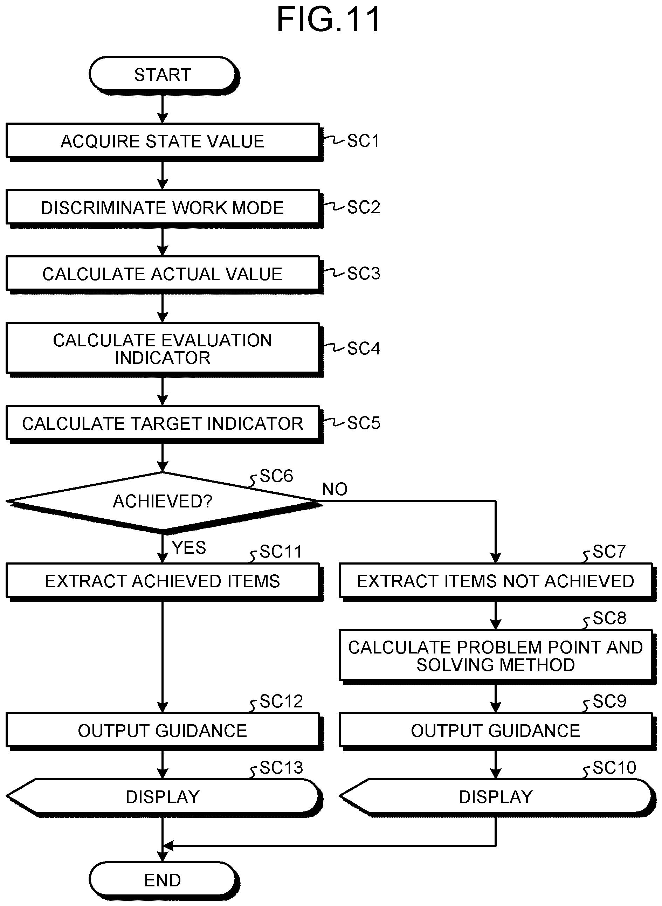

FIG. 11 is a flowchart illustrating a display method according to the embodiment. The operator starts the driving of the wheel loader 1 such that wheel loader 1 implements the cycle work for repeating the series of work modes. The state value acquisition unit 52 acquires a state value of the wheel loader 1 at the time when the wheel loader 1 is driven by the operator (step SC1).

The work mode discrimination unit 53 discriminates, based on the state value acquired by the state value acquisition unit 52, a work mode implemented by the wheel loader 1 (step SC2).

In the training of the operator, at least one cycle work is implemented. The state value acquisition unit 52 acquires a state value of the wheel loader 1 in each of the plurality of work modes.

When the cycle work ends, the actual value calculation unit 54 calculates an actual value relating to driving evaluation for each of the plurality of work modes based on the state value acquired by the state value acquisition unit 52 (step SC3).

In the embodiment, the actual value relating to the driving evaluation includes at least an actual value of a loading amount and an actual value of fuel consumption.

The evaluation unit 56 calculates an evaluation index E (step SC4).

The evaluation index E is represented by the following Expression (9). The evaluation index E is a numerical value of 0 or more but is set to 1.2 when a calculation result is larger than 1.2. That is, the evaluation index E is a value of 0 or more and 1.2 or less.

$$E = \frac{W \times Ft}{Wt \times F} (Work\ efficiency\ in\ excavation\ work)$$

$$E = \frac{Ft}{F} (Work\ efficiency\ in\ work\ other\ than\ excavation\ work) \quad \cdots (9)$$

$$E = \frac{T \times Ft}{Tt \times F} (Fuel\ efficiency)$$

In Expression (9), W represents an actual value of the loading amount, Wt represents a target value of the loading amount, F represents an actual value of the fuel consumption, and Ft represents a target value of the fuel consumption. Expression (9) represents each of the evaluation index E of the work efficiency in the excavation work, the evaluation index E of work efficiency in work other than the excavation work, and the evaluation index E of fuel efficiency.

The evaluation unit 56 calculates the target index Et (step SC5).

The target index Et is represented by the following Expression (10). The target index Et is a value of 0.7 or more and 0.9 or less.

$$Et = 1 - C \qquad \cdots (10)$$

In Expression (10), C represents a tolerance for the target value. The tolerance C is a value of 0.1 or more and 0.3 or less.

The evaluation unit 56 determines, based on the actual values and the target values, whether the driving skills of the operator have achieved targets (step SC6).

In the embodiment, when the evaluation index E is equal to or more than the target index Et, the evaluation unit 56 determines that the driving skills of the operator have achieved the targets.

If determining in step SC6 that the driving skills of the operator have not achieved the targets (step SC6: No), the evaluation unit 56 extracts driving evaluation items that have not achieved the targets (step SC7) .

The evaluation unit 56 calculates a problem and an improvement method for the failure to achieve the targets (step SC8).

For example, when the working time is long because the engine speed is low, the evaluation unit 56 calculates a difference Δa[%] between the actual value and the target value of the accelerator operation amount and a difference Δt[sec.] between the actual value and the target value of the work time. The difference Δa of the accelerator operation amount is represented by the following Expression (11). The difference Δt of the work time is represented by the following Expression (12).

$$\Delta a = RND(N - Nt) \times k \qquad \cdots (11)$$

$$\Delta t = RND(T - Tt) \qquad \cdots (12)$$

In Expression (11), N represents an actual value of the engine speed [rpm], Nt represents a target value of the engine speed [rpm], and k represents a conversion coefficient. In Expression (12), T represents an actual value of the work time [sec.] required to implement one work mode and Tt represents a target value of the work time [sec.]. In Expression (11) and Expression (12), RND indicates integer conversion.

When the driving skills of the operator have not achieved the targets, the guidance output unit 57 outputs guidance relating to the driving of the operator such that the differences between the actual values and the target values decrease (step SC9).

The display control unit 58 displays the actual value and the target value on the display device 8 for each of the plurality of work modes. The display control unit 58 displays evaluation data of the driving skills of the operator on the display device 8. The display control unit 58 displays the guidance output from the guidance output unit 57 on the display device 8 (step SC10).

When the targets are not achieved, the display control unit 58 displays, in a display area 134, a message for urging the operator to make improvement, for example, "step in the accelerator 10 to 20% to reduce an excavation time by 2-3 seconds!".

When determining in step SC6 that the driving skills of the operator have achieved the targets (step SC6: No), the evaluation unit 56 extracts items of driving evaluation that have achieved the targets (step SC11).

When the driving skills of the operator have achieved the targets, the guidance output unit 57 outputs guidance relating to the driving of the operator (step SC12) .

The display control unit 58 displays the actual value and the target value on the display device 8 for each of the plurality of work modes. The display control unit 58 displays a message indicating that the targets have been achieved (step SC13).

When the targets have been achieved, the display control unit 58 displays, in the display area 134, a message praising the operator, for example, "Excellent! Sufficient excavation amount!".

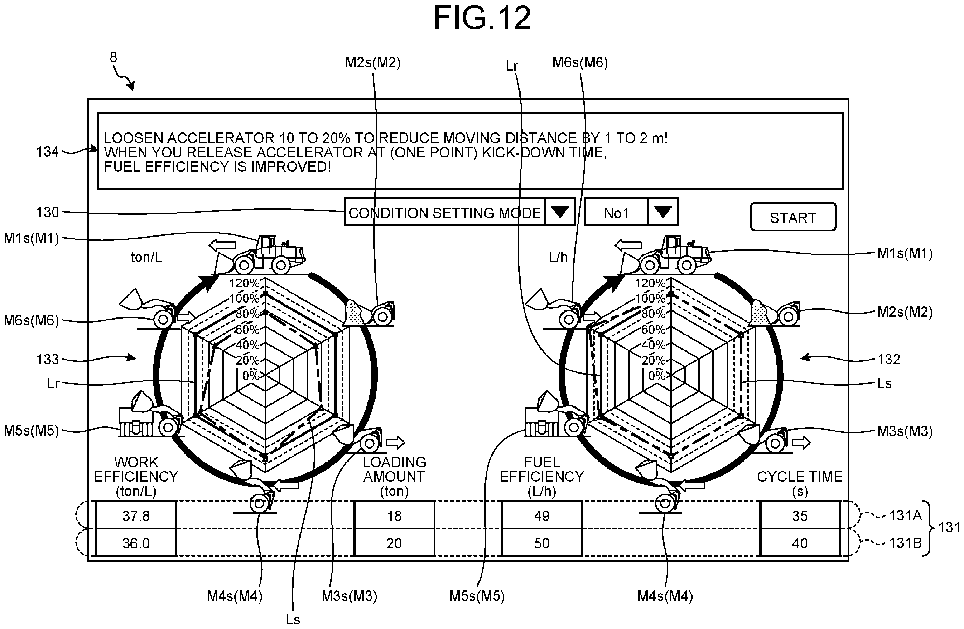

FIG. 12 is a diagram illustrating a display screen of an evaluation result of the driving skills of the operator according to the embodiment. As illustrated in FIG. 12, the display control unit 58 displays a setting mode for target values in a display area 130 of the display device 8. In an example illustrated in FIG. 12, the setting mode for target values is a condition setting mode. The display control unit 58 displays each of the actual values and the target values of the driving evaluation in a display area 131 of the display device 8. In the example illustrated in FIG. 12, the display control unit 58 displays the actual value and the target value for each of the work efficiency, the loading amount, the fuel efficiency, and the cycle time as items of the driving evaluation. In the display area 131, a display area 131A in the upper stage indicates the actual values and a display area 131B in the lower stage indicates the target values.

The display control unit 58 displays the actual value and the target value for each of the plurality of work modes as the evaluation data in a radar chart scheme. The display control unit 58 displays, in a display area 132 of the display device 8, a radar chart indicating the actual value and the target value of the fuel efficiency [L/h] for each of the six work modes. The display control unit 58 displays, in a display area 133 of the display device 8, a radar chart indicating the actual value and the target value of the work efficiency [ton/L] for each of the six work modes. In the radar chart of fuel efficiency, a line Ls indicates the actual value of fuel efficiency and a line Lr indicates the target value of fuel efficiency. In the radar chart of the work efficiency, a line Ls indicates the actual value of the work efficiency and a line Lr indicates the target value of the work efficiency.

In the embodiment, since there are six work modes, the radar chart is hexagonal. Each of the vertices of the hexagon indicates an unloaded forward mode M1, an excavation mode M2, a loaded backward mode M3, a loaded forward mode M4, a loading mode M5, and an unloaded backward mode M6.

The display control unit 58 displays a symbol indicating each of the plurality of work modes. Symbols are disposed at the vertices of the radar chart. The symbols include a symbol M1s indicating the unloaded forward mode M1, a symbol M2s indicating the excavation mode M2, a symbol M3s indicating the loaded backward mode M3, a symbol M4s indicating the loaded forward mode M4, a symbol M5s indicating the loading mode M5, and a symbol M6s indicating the unloaded backward mode M6.

The display control unit 58 displays guidance in the display area 134 of the display device 8. The display control unit 58 displays a predetermined message in characters as the guidance. In the example illustrated in FIG. 12, the display control unit 58 displays a message for urging improvement such as "Loosen the accelerator 10 to 20% to reduce a moving distance by 1 to 2 m! When you release the accelerator at the time of (one point) kickdown, the fuel efficiency is improved!".

The display control unit 58 displays guidance about a work mode corresponding to a symbol selected via the input device 9 among the six symbols indicating the work modes. For example, when the symbol M1s is selected, a message about driving skills in the unloaded forward mode M1 is displayed as guidance. For example, when the symbol M2s is selected, a message about driving skills in the excavation mode M2 is displayed as guidance. The same applies to the symbol M3s, the symbol M4s, the symbol M5s, and the symbol M6s.

As explained above, the guidance storage unit 62 stores a plurality of guidance patterns. For example, a plurality of message patterns for urging improvement, such as "Let's return the accelerator pedal by about 1/4", "Let's reduce the moving distance by 2 to 3 m", and "Focus on the boom operation to raise the boom higher by 100 to 150 cm than this time at the end of backward movement" are stored in the guidance storage unit 62. For example, a plurality of messages for admiration such as "You are at the expert level in the moving distance", "The performance of the machine is sufficiently brought out", and "The boom height is efficiently adjusted" are stored in the guidance storage unit 62. The guidance output unit 57 outputs, based on an actual value, an optimum message out of the messages stored in the guidance storage unit 62.

As explained with reference to FIG. 7, when the guidance level is set to the standard guidance level by the operation of the pull-down button 104, the message for urging the improvement includes a recommended numerical value such as "Reduce the moving distance by 1 to 2 m!". When the guidance level is set for the beginner guidance level, the message for urging the improvement may be display not including a recommended numerical value such as "Reduce the moving distance a little more!".

As explained above, when the target value is set by the master operator mode, the guidance output unit 57 calculates a deviation degree of a state value based on the MT method (Maharanobis-Taguchi System). The guidance output unit 57 outputs guidance using a state value having a deviation degree equal to or greater than a predetermined value as an item of driving evaluation that should be improved. For example, the guidance output unit 57 outputs, for example, a message about the engine speed or the traveling speed and does not output a message about the angle of the boom 12 as the message for urging the improvement of the fuel efficiency.

[Effects]

As explained above, according to the embodiment, when the wheel loader 1 is driven by the operator to implement the cycle work for repeating a series of work modes, the actual value relating to the driving evaluation is calculated for each of the plurality of work modes based on the state value of the wheel loader 1. The target value relating to the driving evaluation is set for each of the plurality of work modes. The actual value and the target value relating to the driving evaluation are displayed on the display device 8 for each of the plurality of work modes, whereby the evaluation result of the driving skills is presented to the operator for each of the plurality of work modes. The evaluation result of the driving skills is presented to the operator for each of the plurality of work modes, whereby the operator can master the driving skills of the cycle work in a short period.

The driving evaluation includes at least the fuel efficiency [Liter/hour] and the work efficiency [ton/Liter] of the wheel loader 1. Optimum accelerator operation varies depending on a work mode of the wheel loader 1. If the accelerator is not stepped on, the fuel efficiency is improved but the excavation amount decreases and the work time increases. Therefore, the work efficiency is deteriorated. In the embodiment, from the viewpoint of the fuel efficiency and the work efficiency, the display system 10 presents, to the operator, which work mode has a problem and how to solve the problem. Therefore, the operator can master driving skills that can improve both of the fuel efficiency and the work efficiency.

In the embodiment, the series of work modes include the unloaded forward mode M1, the excavation mode M2, the loaded backward mode M3, the loaded forward mode M4, the loading mode M5, and the unloaded backward mode M6. The evaluation result of the driving skills is presented to the operator for each of the plurality of work modes of the wheel loader 1, whereby the operator can master the driving skills of the cycle work of the wheel loader 1.

The work mode implemented by the wheel loader 1 is discriminated based on the state value. Therefore, the display system 10 can display the actual value and the target value relating to the driving evaluation for each of the plurality of work modes.

The evaluation unit 56 outputs evaluation data of the driving skills of the operator based on the actual value and the target value. The objective evaluation data of the driving skills is displayed on the display device 8, whereby the operator can master driving skills.

The evaluation data of the driving skills is displayed on the display device 8 for each of the plurality of work modes. Consequently, the operator can master the driving skills of the cycle work.

The evaluation data includes the difference between the actual value and the target value calculated for each of the plurality of work modes. Consequently, the objective evaluation data of the driving skills is presented to the operator.

The actual value and the target value are displayed on the display device in the radar chart scheme for each of the plurality of work modes. Therefore, the operator can intuitively recognize the difference between the actual value and the target value. The operator can intuitively recognize driving in which work mode of the series of work modes should be improved.

The guidance output unit 57 outputs the guidance for improving driving for the work mode in which the driving skills are insufficient. The guidance is displayed on the display device 8. Consequently, the operator can recognize how to solve the problem. Therefore, the operator can master the driving skills in a short period.

The guidance is output for each of the plurality of work modes. Consequently, the operator can recognize which work mode has a problem and how to solve the problem.

In the radar chart, the plurality of symbols (M1s, M2s, M3s, M4s, M5s, M6s) indicating the work modes are displayed. The operator selects a symbol via the input device 9, whereby guidance for a work mode corresponding to the selected symbol is displayed on the display device 8. Consequently, the operator can recognize which work mode has a problem and how to solve the problem.

A plurality of guidance patterns are stored in advance in the guidance storage unit 62. The guidance output unit 57 can output proper guidance based on the actual value and the data stored in the guidance storage unit 62.

The guidance includes a message represented by characters. Consequently, the operator can recognize which work mode has a problem and how to solve the problem.

The target value is stored in advance in the target value storage unit 61. The target value is set based on the data stored in the target value storage unit 61.

The target value setting unit 55 can change the target value based on the data input from the input device 9. The target value is customized to, for example, a proper value matching training conditions.

The target value is set based on the model driving of the skilled operator, whereby the target value is set to, for example, a proper value matching a work site.

[Other embodiments]

In the embodiment explained above, each of the timer unit 51, the state value acquisition unit 52, the work mode discrimination unit 53, the actual value calculation unit 54, the target value setting unit 55, the evaluation unit 56, the guidance output unit 57, the display control unit 58, the target value storage unit 61, the guidance storage unit 62, and the master storage unit 63 may be configured by different hardware.

In the embodiment explained above, the loading target is the haul vehicle 220. The loading target may not be the haul vehicle 220. Examples of the loading target include at least one of a hopper, a belt conveyor, and a crusher.

In the embodiment explained above, the work machine 1 is a wheel loader. The work machine 1 may be an excavator including front-loading type working equipment. The work machine 1 may be an excavator including backhoetype working equipment in which an opening of a bucket faces backward in excavation work.

[Supplementary note]

Note that the present application claims priority based on Japanese Patent Application (Patent Application No. 2021-085484) filed on May 20, 2021, the entire contents of which are incorporated herein by reference.

Reference Sings List

| | |
|---|---|
| 1 | WHEEL LOADER (WORK MACHINE) |
| 2 | VEHICLE BODY |
| 2F | VEHICLE BODY FRONT PART |
| 2R | VEHICLE BODY REAR PART |
| 3 | ARTICULATE MECHANISM |
| 4 | CAB |
| 5 | WHEEL |
| 5F | FRONT WHEEL |
| 5R | REAR WHEEL |
| 6 | WORKING EQUIPMENT |
| 7 | OPERATION DEVICE |
| 7A | DRIVE SYSTEM OPERATION DEVICE |
| 7B | WORKING EQUIPMENT OPERATION DEVICE |
| 8 | DISPLAY DEVICE |
| 9 | INPUT DEVICE |
| 10 | DISPLAY SYSTEM |
| 11 | ARTICULATE CYLINDER |
| 12 | BOOM |
| 13 | BUCKET |
| 13A | BLADE TIP PORTION |
| 13B | OPENING |
| 14 | BELL BRANK |
| 15 | BUCKET LINK |
| 16 | BRACKET |
| 17 | BRACKET |
| 18 | LIFT CYLINDER |
| 19 | BUCKET CYLINDER |
| 20 | ENGINE |
| 21 | POWER TAKE-OFF |
| 22 | POWER TRANSMISSION DEVICE |
| 23 | BRAKE DEVICE |

| 24 | STEERING PUMP |
|---|---|
| 25 | STEERING CONTROL VALVE |
| 26 | WORKING EQUIPMENT PUMP |
| 27 | WORKING EQUIPMENT CONTROL VALVE |
| 30 | SENSOR SYSTEM |
| 31 | ENGINE SPEED SENSOR |
| 32 | VEHICLE SPEED SENSOR |
| 33 | FUEL CONSUMPTION SENSOR |
| 34 | WEIGHT SENSOR |
| 35 | BOOM ANGLE SENSOR |
| 36 | BUCKET ANGLE SENSOR |
| 40 | CONTROL DEVICE |
| 40A | DRIVE CONTROL DEVICE |
| 40B | DISPLAY CONTROL DEVICE |
| 41 | PROCESSING CIRCUIT |
| 42 | STORAGE CIRCUIT |
| 51 | TIMER UNIT |
| 52 | STATE VALUE ACQUISITION UNIT |
| 53 | WORK MODE DISCRIMINATION UNIT |
| 54 | ACTUAL VALUE CALCULATION UNIT |
| 55 | TARGET VALUE SETTING UNIT |
| 56 | EVALUATION UNIT |
| 57 | GUIDANCE OUTPUT UNIT |
| 58 | DISPLAY CONTROL UNIT |
| 61 | TARGET VALUE STORAGE UNIT |
| 62 | GUIDANCE STORAGE UNIT |
| 63 | MASTER STORAGE UNIT |
| 71 | ACCELERATOR OPERATION UNIT |
| 72 | BRAKE OPERATION UNIT |
| 73 | STEERING OPERATION UNIT |
| 74 | FORWARD/BACKWARD MOVEMENT OPERATION UNIT |
| 75 | BOOM OPERATION UNIT |
| 76 | BUCKET OPERATION UNIT |
| 101 | PULL-DOWN BUTTON |
| 102 | PULL-DOWN BUTTON |
| 103 | PULL-DOWN BUTTON |
| 104 | PULL-DOWN BUTTON |
| 105 | DISPLAY AREA |
| 106 | DISPLAY AREA |
| 107 | PULL-DOWN BUTTON |
| 108 | PULL-DOWN BUTTON |
| 109 | PULL-DOWN BUTTON |
| 110 | PULL-DOWN BUTTON |
| 111 | BUTTON SYMBOL |
| 112 | DISPLAY AREA |
| 113 | DISPLAY AREA |
| 114 | DISPLAY AREA |
| 121 | BUTTON SYMBOL |
| 122 | DISPLAY AREA |
| 123 | BUTTON SYMBOL |
| 124 | BUTTON SYMBOL |
| 125 | DISPLAY AREA |
| 130 | DISPLAY AREA |
| 131 | DISPLAY AREA |
| 131A | DISPLAY AREA |
| 131B | DISPLAY AREA |
| 132 | DISPLAY AREA |
| 133 | DISPLAY AREA |

| 134 | DISPLAY AREA |
| --- | --- |
| 200 | GROUND |
| 210 | NATURAL GROUND (EXCAVATION TARGET) |
| 220 | HAUL VEHICLE |
| 230 | DUMP BODY (LOADING TARGET) |
| 300 | EXCAVATED OBJECT |
| AXa | TURNING AXIS |
| AXb | TURNING AXIS |
| AXe | TURNING AXIS |
| AXd | TURNING AXIS |
| AXe | TURNING AXIS |
| AXf | TURNING AXIS |
| CXf | ROTATION AXIS |
| CXr | ROTATION AXIS |
| Lr | LINE |
| Ls | LINE |
| M1 | UNLOADED FORWARD MODE |
| M2 | EXCAVATION MODE |
| M3 | LOADED BACKWARD MODE |
| M4 | LOADED FORWARD MODE |
| M5 | LOADING MODE |
| M6 | UNLOADED BACKWARD MODE |
| M1s | SYMBOL |
| M2s | SYMBOL |
| M3s | SYMBOL |
| M4s | SYMBOL |
| M5s | SYMBOL |
| M6s | SYMBOL |

**Claims**

1. A display system comprising:

   a state value acquisition unit that acquires a state value of a work machine at a time when the work machine is driven by an operator to implement cycle work for repeating a series of work modes;
   an actual value calculation unit that calculates, based on the state value, an actual value relating to driving evaluation for the work machine for each of the work modes;
   a target value setting unit that sets a target value relating to the driving evaluation for each of the work modes; and
   a display control unit that displays the actual value and the target value on a display device.

2. The display system according to claim 1, wherein
   the driving evaluation includes fuel efficiency indicating fuel consumption of the work machine per unit time and work efficiency indicating a work amount of the work machine with respect to the fuel consumption.

3. The display system according to claim 1 or 2, wherein

   the work machine includes working equipment, and
   the series of work modes includes an unloaded forward mode in which the work machine moves forward to approach an excavation target, an excavation mode in which the work machine excavates the excavation target with the working equipment, a loaded backward mode in which the work machine moves backward to separate from the excavation target in a state in which an excavated object is held by the working equipment, a loaded forward mode in which the work machine moves forward to approach a loading target, a loading mode in which the work machine loads the excavated object held by the working equipment onto the loading target, and an unloaded backward mode in which the work machine moves backward to separate from the loading target.

4. The display system according to any one of claims 1 to 3, further comprising
   a work mode discrimination unit that discriminates, based on the state value, the work mode implemented by the work machine.

**5.** The display system according to any one of claims 1 to 4, further comprising

an evaluation unit that evaluates driving skills of the operator based on the actual value and the target value, wherein
the display control unit displays evaluation data of the driving skills output from the evaluation unit.

**6.** The display system according to claim 5, wherein

the evaluation unit evaluates the driving skills for each of the work modes, and
the display control unit displays the evaluation data for each of the work modes.

**7.** The display system according to claim 5 or 6, wherein
the evaluation data includes a difference between the actual value and the target value calculated for each of the work modes.

**8.** The display system according to any one of claims 5 to 7, wherein
the display control unit displays the actual value and the target value as the evaluation data in a radar chart scheme for each of the work modes.

**9.** The display system according to any one of claims 1 to 8, further comprising

a guidance output unit that outputs guidance relating to driving of the operator to reduce a difference between the actual value and the target value, wherein
the display control unit displays the guidance.

**10.** The display system according to claim 9, wherein
the guidance output unit outputs the guidance for each of the work modes.

**11.** The display system according to claim 10, wherein
the display control unit displays a symbol indicating the work mode and displays the guidance for the work mode corresponding to the symbol selected via an input device.

**12.** The display system according to any one of claims 9 to 11, further comprising

a guidance storage unit that stores a plurality of guidance patterns, wherein
the guidance output unit outputs the guidance based on the actual value and data stored in the guidance storage unit.

**13.** The display system according to any one of claims 9 to 12, wherein
the display control unit displays a predetermined message in characters as the guidance.

**14.** The display system according to any one of claims 1 to 13, further comprising

a target value storage unit that stores the target value, wherein
the target value setting unit sets the target value based on data stored in the target value storage unit.

**15.** The display system according to claim 14, wherein
the target value setting unit changes the target value based on input data from the input device.

**16.** The display system according to any one of claims 1 to 15, wherein
the target value setting unit sets the target value based on the state value when model driving is performed by another operator.

**17.** A work machine comprising the display system according to any one of claims 1 to 16.

**18.** A display method comprising:

acquiring a state value of a work machine at a time when the work machine is driven by an operator to implement a cycle work for repeating a series of work modes;

calculating, based on the state value, an actual value relating to driving evaluation of the work machine for each of the work modes;

setting a target value relating to the driving evaluation for each of the work modes; and

displaying the actual value and the target value on a display device.

FIG.1

# FIG.2

# FIG.3

# FIG.4

[M1: UNLOADED FORWARD MODE]

<FORWARD MOVEMENT>

(A)

[M2: EXCAVATION MODE]

<FORWARD MOVEMENT>

(B)

<TILTING MOTION>

[M3: LOADED BACKWARD MODE]

<BACKWARD MOVEMENT>

(C)

# FIG.5

[M4: LOADED FORWARD MODE]

<FORWARD MOVEMENT> 13

6

300

220    230

(A)

12

1

200

[M5: LOADING MODE]

<FORWARD MOVEMENT> 6    13    <DUMPING MOTION>

1    12    220  230

300

(B)

200

[M6: UNLOADED BACKWARD MODE]

<BACKWARD MOVEMENT>

1    6    13    220    230

(C)    12

200

# FIG.6

10 →

## DISPLAY CONTROL DEVICE 40B

### PROCESSING CIRCUIT 41

| Unit | No. |
|---|---|
| TIMER UNIT | 51 |
| STATE VALUE ACQUISITION UNIT | 52 |
| WORK MODE DISCRIMINATION UNIT | 53 |
| ACTUAL VALUE CALCULATION UNIT | 54 |
| TARGET VALUE SETTING UNIT | 55 |
| EVALUATION UNIT | 56 |
| GUIDANCE OUTPUT UNIT | 57 |
| DISPLAY CONTROL UNIT | 58 |

### STORAGE CIRCUIT 42

| Unit | No. |
|---|---|
| TARGET VALUE STORAGE UNIT | 61 |
| GUIDANCE STORAGE UNIT | 62 |
| MASTER STORAGE UNIT | 63 |

### OPERATION DEVICE 7

| Unit | No. |
|---|---|
| ACCELERATOR OPERATION UNIT | 71 |
| BRAKE OPERATION UNIT | 72 |
| STEERING OPERATION UNIT | 73 |
| FORWARD/BACKWARD MOVEMENT OPERATION UNIT | 74 |
| BOOM OPERATION UNIT | 75 |
| BUCKET OPERATION UNIT | 76 |

### DISPLAY DEVICE 8

### INPUT DEVICE 9

### SENSOR SYSTEM 30

| Sensor | No. |
|---|---|
| ENGINE SPEED SENSOR | 31 |
| VEHICLE SPEED SENSOR | 32 |
| FUEL CONSUMPTION SENSOR | 33 |
| WEIGHT SENSOR | 34 |
| BOOM ANGLE SENSOR | 35 |
| BUCKET ANGLE SENSOR | 36 |

# FIG.7

A figure depicting a TARGET SETTING SCREEN (8).

| | | |
|---|---|---|
| ENGINE MODE | P MODE ▼ (101) | |
| | TARGET SETTING SCREEN | |
| SELECT DISTANCE | STANDARD (15 TO 20 m) ▼ (102) | |
| CYCLE TIME | 35 TO 40 SECONDS ▼ (103) | |
| GUIDANCE | STANDARD ▼ (104) | |
| SPECIFIC GRAVITY CORRECTION (/1.8) | 1.8 (105) | |
| CAPACITY CORRECTION (/6.8) | 6.8 (106) | |

**AUTOMATIC GENERATION**

| | MOVING DISTANCE | ENGINE SPEED |
|---|---|---|
| UNLOADED FORWARD | 1.5Lb ▼ | 1200 ▼ |
| LOADED BACKWARD | 1.5Lb ▼ | 1200 ▼ |
| LOADED FORWARD | 1.2Lb ▼ | 1500 ▼ |
| LOADING | | 1500 ▼ |
| UNLOADED BACKWARD | 1.2Lb ▼ | 1200 ▼ |
| EXCAVATION | | |

ACCELERATOR OFF TIMING: ABSENT ▼

| TARGET VALUE | DETERMINE | |
|---|---|---|
| CYCLE TIME (s) 40 | +10%≥ ▼ (107) | |
| LOADING AMOUNT (ton) 20 | -10%≤ ▼ (108) | |
| FUEL EFFICIENCY (L/h) 50 | +10%≥ ▼ (109) | |
| WORK EFFICIENCY (ton/L) 36.0 | -10%≤ ▼ (110) | |

CREATE (111)

112 113 114

EP 4 317 607 A1

# FIG.8

START

INPUT TRAINING CONDITIONS — SA1

CALCULATE MOVING DISTANCE FOR EACH OF PLURALITY OF WORK MODES — SA2

CALCULATE CYCLE TIME — SA3

TARGET CYCLE TIME IS EQUAL TO OR LONGER THAN CALCULATED CYCLE TIME? — SA4 — NO

YES

CALCULATE WORK EFFICIENCY — SA5

CALCULATED WORK EFFICIENCY IS EQUAL TO OR HIGHER THAN MAXIMUM WORK EFFICIENCY? — SA6 — NO

YES

DETERMINE CALCULATED WORK EFFICIENCY AS MAXIMUM WORK EFFICIENCY — SA7

CALCULATION IS COMPLETED? — SA8 — NO

YES

CALCULATE FUEL EFFICIENCY — SA9

DISPLAY TARGET VALUE — SA10

END

# FIG.9

EP 4 317 607 A1

| START RECORDING (121) | CREATE MASTER (123) | | | TARGET SETTING SCREEN | CLEAR ALL (124) | | GUIDANCE | STANDARD ▼ |
|---|---|---|---|---|---|---|---|---|
| | | | | | | | SPECIFIC GRAVITY CORRECTION (/1.8) | 1.8 |
| | | | | | | | CAPACITY CORRECTION (/6.8) | 6.8 |

| CYCLE TIME [SEC] | LOADING AMOUNT [ton] | FUEL EFFI-CIENCY [L/h] | WORK EFFI-CIENCY [ton/L] | CYCLE TIME [SEC] | LOADING AMOUNT [ton] | FUEL EFFI-CIENCY [L/h] | WORK EFFI-CIENCY [ton/L] |
|---|---|---|---|---|---|---|---|
| 40 | 20 | 50 | 36.0 | 41 | 20 | 50 | 35.1 |
| 41 | 20 | 50 | 35.1 | 40 | 20 | 50 | 36.0 |
| 40 | 19 | 49 | 34.9 | 40 | 20 | 49 | 36.7 |
| 39 | 21 | 50 | 38.9 | 40 | 21 | 50 | 37.8 |
| 40 | 20 | 51 | 35.3 | 39 | 20 | 49 | 37.7 |
| 41 | 20 | 50 | 35.1 | 41 | 19 | 51 | 32.7 |
| 40 | 20 | 50 | 36.0 | 40 | 20 | 51 | 35.3 |
| 40 | 20 | 50 | 36.0 | 40 | 21 | 50 | 37.8 |

**TARGET VALUE** — **DETERMINE**

| CYCLE TIME (s) | 40 | +10%≥ ▼ |
| LOADING AMOUNT (ton) | 20 | -10%≤ ▼ |
| FUEL EFFICIENCY (L/h) | 50 | +10%≥ ▼ |
| WORK EFFICIENCY (ton/L) | 36.0 | -10%≤ ▼ |

122

125

# FIG.10

```
                    ┌──────────────┐
                    │    START     │
                    └──────┬───────┘
                           │
                           ▼  ◄─────────────────────┐
        ╱─────────────────────────────────╱          │
       ╱    ACQUIRE STATE VALUE           ╱ ～SB1     │
      ╱─────────────────────────────────╱            │
                           │                          │
                           ▼                          │
        ┌─────────────────────────────────┐          │
        │      EVALUATE VALIDITY          │ ～SB2     │
        └─────────────────────────────────┘          │
                           │                          │
                           ▼          ┌SB3            │
              ╱─────────────────────╲      NO         │
             ╱  ACQUISITION IS COMPLETED? ╲───────────┘
              ╲─────────────────────╱
                           │ YES
                           ▼
        ┌─────────────────────────────────┐
        │ CALCULATE AVERAGE VALUE AND STANDARD │
        │ DEVIATION FOR EACH OF PLURALITY OF   │ ～SB4
        │          WORK MODES                  │
        └─────────────────────────────────┘
                           │
                           ▼
        ┌─────────────────────────────────┐
        │ CALCULATE CORRELATION COEFFICIENT OF │ ～SB5
        │          STATE VALUE                 │
        └─────────────────────────────────┘
                           │
                           ▼
                    ┌──────────────┐
                    │     END      │
                    └──────────────┘
```

# FIG.11

START

ACQUIRE STATE VALUE — SC1

DISCRIMINATE WORK MODE — SC2

CALCULATE ACTUAL VALUE — SC3

CALCULATE EVALUATION INDICATOR — SC4

CALCULATE TARGET INDICATOR — SC5

ACHIEVED? — SC6

NO

YES — SC11

EXTRACT ACHIEVED ITEMS

EXTRACT ITEMS NOT ACHIEVED — SC7

CALCULATE PROBLEM POINT AND SOLVING METHOD — SC8

OUTPUT GUIDANCE — SC12

OUTPUT GUIDANCE — SC9

DISPLAY — SC13

DISPLAY — SC10

END

# FIG.12

LOOSEN ACCELERATOR 10 TO 20% TO REDUCE MOVING DISTANCE BY 1 TO 2 m!
WHEN YOU RELEASE ACCELERATOR AT (ONE POINT) KICK-DOWN TIME,
FUEL EFFICIENCY IS IMPROVED!

CONDITION SETTING MODE ▼   No1 ▼   START

| WORK EFFICIENCY (ton/L) | LOADING AMOUNT (ton) | FUEL EFFICIENCY (L/h) | CYCLE TIME (s) |
|---|---|---|---|
| 37.8 | 18 | 49 | 35 |
| 36.0 | 20 | 50 | 40 |

EP 4 317 607 A1

<div style="text-align:center">**INTERNATIONAL SEARCH REPORT**</div>

| International application No. |
|---|
| **PCT/JP2022/019627** |

**A. CLASSIFICATION OF SUBJECT MATTER**

*E02F 9/20*(2006.01)i; *E02F 9/26*(2006.01)i; *G09B 9/042*(2006.01)i; *G09B 9/052*(2006.01)i; *G09B 19/16*(2006.01)i
FI: E02F9/26 Z; G09B9/052; G09B19/16; E02F9/26 A; E02F9/20 Q; G09B9/042 A

According to International Patent Classification (IPC) or to both national classification and IPC

**B. FIELDS SEARCHED**

Minimum documentation searched (classification system followed by classification symbols)

E02F9/20; E02F9/26; G09B9/042; G09B9/052; G09B19/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/189888 A1 (SUMITOMO HEAVY INDUSTRIES, LTD.) 03 October 2019 (2019-10-03) paragraphs [0014], [0035]-[0074], [0093]-[0114], fig. 1-5 | 1-18 |
| Y | JP 6775701 B1 (DMG MORI SEIKI CO LTD) 28 October 2020 (2020-10-28) paragraphs [0029]-[0031], [0067]-[0080], [0090]-[0103], fig. 2, 6, 8 | 1-18 |
| Y | JP 2006-171184 A (TOSHIBA CORP) 29 June 2006 (2006-06-29) paragraphs [0016]-[0018], [0090]-[0093], [0102]-[0104], fig. 1, 7, 9 | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 June 2022** | **28 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 317 607 A1

## INTERNATIONAL SEARCH REPORT
### Information on patent family members

International application No.

**PCT/JP2022/019627**

| Patent document cited in search report | | | Publication date (day/month/year) | Patent family member(s) | | | Publication date (day/month/year) |
|---|---|---|---|---|---|---|---|
| WO | 2019/189888 | A1 | 03 October 2019 | US 2021/0012163 A1 paragraphs [0021], [0042]-[0081], [0100]-[0121], fig. 1-5 EP 3779071 A1 CN 112004975 A KR 10-2020-0130376 A | | | |
| JP | 6775701 | B1 | 28 October 2020 | (Family: none) | | | |
| JP | 2006-171184 | A | 29 June 2006 | (Family: none) | | | |

Form PCT/ISA/210 (patent family annex) (January 2015)

36

**EP 4 317 607 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019207570 A
- JP 2021085484 A